(19) Europäisches Patentamt / European Patent Office / Office européen des brevets

(11) **EP 4 123 607 A1**

(12) **EUROPEAN PATENT APPLICATION**
published in accordance with Art. 153(4) EPC

(43) Date of publication:
**25.01.2023 Bulletin 2023/04**

(21) Application number: **20925550.4**

(22) Date of filing: **18.03.2020**

(51) International Patent Classification (IPC):
**G07C 9/37** (2020.01)   **E05B 49/00** (2006.01)
**G06T 1/00** (2006.01)

(52) Cooperative Patent Classification (CPC):
**G06V 20/52; E05B 49/00; G06T 1/00; G06V 10/22; G06V 40/172; G07C 9/37;** G06V 2201/07

(86) International application number:
**PCT/JP2020/012036**

(87) International publication number:
**WO 2021/186626 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NEC Corporation**
**108-8001 Tokyo (JP)**

(72) Inventor: **INOUE Junichi**
**Tokyo 108-8001 (JP)**

(74) Representative: **Betten & Resch**
**Patent- und Rechtsanwälte PartGmbB**
**Maximiliansplatz 14**
**80333 München (DE)**

(54) **GATE DEVICE, AUTHENTICATION SYSTEM, GATE DEVICE CONTROL METHOD, AND STORAGE MEDIUM**

(57)     Provided is a gate device that accurately determines a user to be authenticated. The gate device is provided with an acquisition unit, a setting unit, and a gate control unit. The acquisition unit acquires an upper image and a lower image respectively from an upper camera and a lower camera that is installed on a vertically lower side of the upper camera. When a plurality of users are captured in both the upper image and the lower image, the setting unit identifies a user in the forward-most row among the plurality of users by calculating the distance between each of the plurality of users and a camera installation surface, and then sets the identified user as a person to be authenticated. The gate control unit controls a gate on the basis of the result of authentication of the person to be authenticated.

Fig. 1

EP 4 123 607 A1

**Description**

[Technical Field]

The some non-limiting embodiments relates to a gate device, an authentication system, a method of controlling the gate device, and a storage medium.

[Background Art]

Services using face authentication have started to spread (see PTLs 1 to 3). For example, face authentication has started to be applied to various procedures (for example, check in, baggage check, security check, and the like) at airports. A service using face authentication is often provided using a gate device.

[Citation List]

[Patent Literature]

[PTL 1] JP 2006-236244 A
[PTL 2] JP 2018-128970 A
[PTL 3] JP 2018-109935 A

[Summary of Invention]

[Technical Problem]

As described above, services using face authentication have started to be provided at airports and the like. For example, a security check using face authentication is performed at a security check site at an airport. Here, the device installation space of the existing airport is limited, and the gate device for face authentication is often installed in a narrow space.
Therefore, when the gate device acquires an image (the image including the face region), the image may include not only the face image of a user in the forward-most row (the user to be authenticated) but also the face image of a user behind. That is, since the gate device for the face authentication is installed in a narrow space, the distance between the users who line up before the gate device is short, and a plurality of people may appear in the same image.
In this case, the gate device is required to select one face image from the plurality of face images and set the selected face image as the authentication target. For example, it is conceivable that the gate device calculates an area (size) for each of a plurality of face images and sets a face image having the largest area as an authentication target. This handling is based on the premise that the face image of a user who lines up in the forward-most row for the gate device is larger than the face image of a user who lines up behind. However, the size of the face has a large individual difference, and in the above handling (determination of the authentication target based on the area of the face image), a user who lines up behind a user who lines up in the forward-most row may be set as the authentication target.
A main object of the some non-limiting embodiments is to provide a gate device, an authentication system, a method of controlling the gate device, and a storage medium that contribute to accurately determining a user to be authenticated.

[Solution to Problem]

According to a first aspect of the some non-limiting embodiments, there is provided a gate device including an acquisition unit that acquires an upper image and a lower image from an upper camera and a lower camera installed below the upper camera in a vertical direction, respectively, a setting unit that, when a plurality of users appears in both of the upper image and the lower image, identifies a user in a forward-most row from among the plurality of users by calculating a distance between each of the plurality of users and a camera installation face, and sets the identified user as a person to be authenticated, and a gate control unit that controls a gate based on a result of authentication of the person to be authenticated.
According to a second aspect of the some non-limiting embodiments, there is provided an authentication system including a server device that stores biological information about each of a plurality of system users and performs an authentication process using the plurality of pieces of biological information, and a gate device connected to the server device, wherein the gate device includes an acquisition unit that acquires an upper image and a lower image from an upper camera and a lower camera installed below the upper camera in a vertical direction, respectively, a setting unit that, when a plurality of users appears in both of the upper image and the lower image, identifies a user in a forward-most row from among the plurality of users by calculating a distance between each of the plurality of users and a camera installation face, and sets the identified user as a person to be authenticated, an authentication request unit that requests the server device to authenticate the person to be authenticated, and a gate control unit that controls a gate based on a result of authentication of the person to be authenticated.

According to a third aspect of the some non-limiting embodiments, there is provided a method of controlling a gate device, the method including the steps, performed by the gate device, of acquiring an upper image and a lower image from an upper camera and a lower camera installed below the upper camera in a vertical direction, respectively, when a plurality of users appears in both of the upper image and the lower image, identifying a user in a forward-most row from among the plurality of users by calculating a distance between each of the plurality of users and a camera installation face, and setting the identified user as a person to be authenticated, and controlling a gate based on a result of authentication of the person to be authenticated.

According to a fourth aspect of the some non-limiting embodiments, there is provided a computer-readable storage medium storing a program for causing a computer mounted on a gate device to execute the steps of acquiring an upper image and a lower image from an upper camera and a lower camera installed below the upper camera in a vertical direction, respectively, when a plurality of users appears in both of the upper image and the lower image, identifying a user in a forward-most row from among the plurality of users by calculating a distance between each of the plurality of users and a camera installation face, and setting the identified user as a person to be authenticated, and controlling a gate based on a result of authentication of the person to be authenticated.

[Advantageous Effects of Invention]

According to each aspect of the some non-limiting embodiments, a gate device, an authentication system, a method of controlling the gate device, and a storage medium that contribute to accurately determining a user to be authenticated are provided. The effects of the some non-limiting embodiments are not limited to the above. According to the some non-limiting embodiments, other effects may be exhibited instead of or in addition to the effects.

[Brief Description of Drawings]

Fig. 1 is a diagram for describing an outline of an example embodiment.
Fig. 2 is a diagram illustrating an example of a schematic configuration of an authentication system according to the first example embodiment.
Fig. 3 is a view illustrating an example of an appearance of the gate device according to the first example embodiment.
Fig. 4 is a view illustrating an example of a plan view of the gate device according to the first example embodiment.
Fig. 5 is a diagram illustrating an example of a processing configuration of the gate device according to the first example embodiment.
Fig. 6 is a diagram for explaining the operation of a biological information acquisition unit according to the first example embodiment.
Fig. 7 is a flowchart illustrating an example of the operation of an authentication target setting unit according to the first example embodiment.
Fig. 8 is a diagram for explaining the operation of the authentication target setting unit according to the first example embodiment.
Fig. 9 is a diagram for explaining the operation of the authentication target setting unit according to the first example embodiment.
Fig. 10 is a diagram for explaining the operation of the authentication target setting unit according to the first example embodiment.
Fig. 11 is a flowchart illustrating an example of a front/rear relationship identification process of the authentication target setting unit according to the first example embodiment.
Fig. 12 is a diagram for explaining the operation of the authentication target setting unit according to the first example embodiment.
Fig. 13 is a diagram for explaining the operation of the authentication target setting unit according to the first example embodiment.
Fig. 14 is a diagram illustrating an example of a graph illustrating a correspondence relationship between a distance between a camera installation face and a target object and a position of the target object in a common region.

Fig. 15 is a diagram illustrating an example of an authentication request.

Fig. 16 is a flowchart illustrating an example of the operation of the gate device according to the first example embodiment.

Fig. 17 is a diagram illustrating an example of a processing configuration of a server device according to the first example embodiment.

Fig. 18 is a diagram illustrating an example of a user database.

Fig. 19 is a sequence diagram illustrating an example of the operation of the authentication system according to the first example embodiment.

Fig. 20 is a diagram for explaining the relationship between the actual position of the user and the position of the user appearing in the image.

Fig. 21 is a flowchart illustrating an example of the operation of an authentication target setting unit according to the second example embodiment.

Fig. 22 is a diagram illustrating an example of a hardware configuration of the gate device.

[Example Embodiment]

First, an outline of an example embodiment will be described. The reference numerals in the drawings attached to this outline are attached to respective elements for convenience as an example for assisting understanding, and the description of this outline is not intended to be any limitation. In a case where there is no particular explanation, the block described in each drawing represents not a configuration of a hardware unit but a configuration of a functional unit. Connection lines between blocks in each drawing include both bidirectional and unidirectional lines. The unidirectional arrow schematically indicates a flow of a main signal (data), and does not exclude bidirectionality. In the present specification and the drawings, elements that can be similarly described are denoted by the same reference numerals, and redundant description can be omitted.

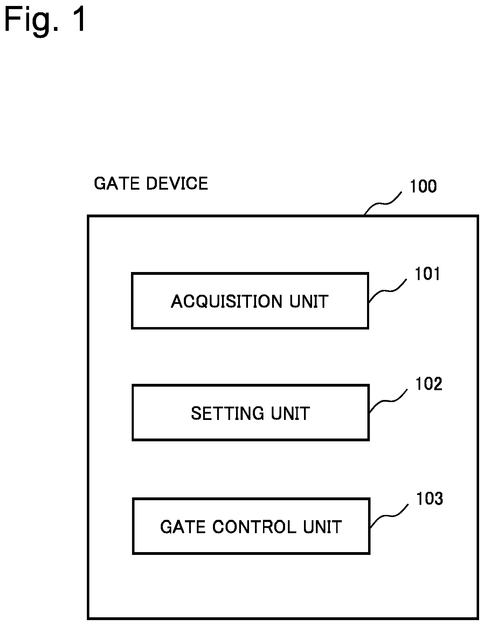

A gate device 100 according to an example embodiment includes an acquisition unit 101, a setting unit 102, and a gate control unit 103 (see Fig. 1). The acquisition unit 101 acquires an upper image and a lower image from an upper camera and a lower camera, respectively, that is installed vertically below the upper camera. When a plurality of users appears in both the upper image and the lower image, the setting unit 102 identifies a user in the forward-most row from among the plurality of users by calculating the distance between each of the plurality of users and a camera installation face, and then sets the identified user as a person to be authenticated. The gate control unit 103 controls a gate based on the result of authentication of the person to be authenticated.

Gate device 100 acquires images from two cameras (upper camera, lower camera). In a case where a plurality of users appears in the image, the gate device 100 identifies a person to be authenticated. The gate device 100 calculates the distance between each user and the camera installation face, for example, using the parallax of the target object (the user commonly appearing in the two images) in the upper image and the lower image. The gate device 100 identifies a user closest to the gate device based on the calculated distance, and sets the identified user as a person to be authenticated. As described above, the gate device 100 identifies the user in the forward-most row regardless of the size of the face region having a large individual difference, so that the user to be authenticated can be accurately determined.

Hereinafter, specific example embodiments will be described in more detail with reference to the drawings.

(First example embodiment)

The first example embodiment will be described in more detail with reference to the drawings.

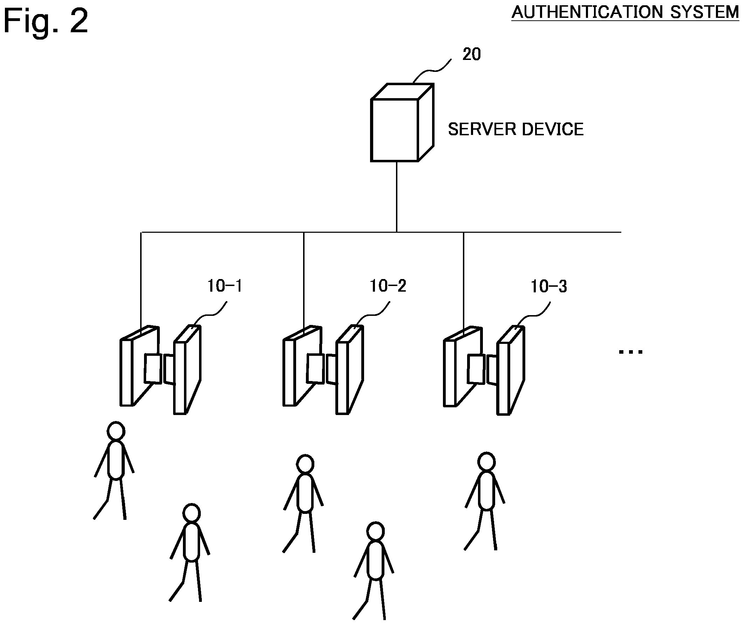

Fig. 2 is a diagram illustrating an example of a schematic configuration of the authentication system according to the first example embodiment. Referring to Fig. 2, the authentication system includes a plurality of gate devices 10-1 to 10-3 and a server device 20.

In the following description, in a case where there is no particular reason to distinguish the gate devices 10-1 to 10-3, they are simply referred to as a "gate device 10". Similarly, for other components, reference numerals on the left side divided by hyphens are used to represent the components.

The configuration illustrated in Fig. 2 is an example and is not intended to limit the number of gate devices 10 or the like. The authentication system may include at least one or more gate devices 10.

Gate device 10 and server device 20 are configured to be able to communicate with each other by wired or wireless communication means. Server device 20 may be installed in the same building as gate device 10, or may be installed on a network (cloud).

The gate device 10 is, for example, a device installed in an airport or a station. Gate device 10 controls passage of a user. The gate device 10 permits passage of a user (hereinafter, it is described as an authentication successful person) who has been successfully authenticated by the server device 20. The gate device 10 does not permit passage of a user who has not been authenticated by the server device 20 or a user who has failed in authentication.

The server device 20 is a device that performs an authentication process. Specifically, server device 20 stores biological information about a user (system user) who is permitted to pass through the gate device 10. The server device 20 performs the authentication process using the biological information acquired from the gate device 10 and the biological information stored in advance, and notifies the gate device 10 of a result of authentication (authentication succeeded, authentication failed).

The gate device 10 opens the gate to permit passage of the authentication successful person when the authentication successful person enters the internal area of the gate device (the area surrounded by the main body of the gate device 10).

Examples of the biological information about the user include data (feature amount) calculated from physical features unique to an individual such as a face and an iris pattern (pattern). Alternatively, the biological information about the user may be image data such as a face image and an iris image. The biological information about the user may include the physical characteristics of the user as information.

Next, details of each device included in the authentication system according to the first example embodiment will be described. In the following description, a "face image" of the user will be described as an example of the biological information.

[Gate device]

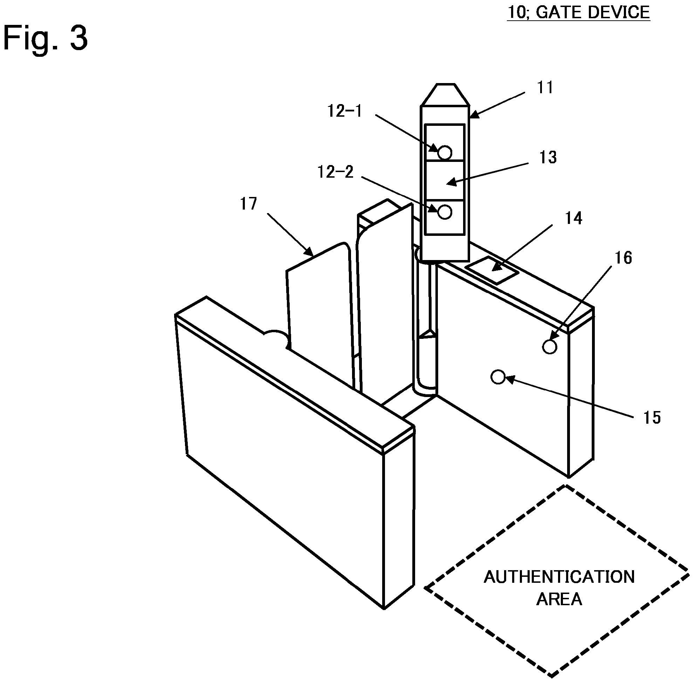

Fig. 3 is a view illustrating an example of an appearance of the gate device 10 according to the first example embodiment.

Referring to Fig. 3, the gate device 10 includes a face authentication module 11. The face authentication module 11 is attached to the main body of the gate device 10. The face authentication module 11 includes two cameras (an upper camera 12-1 and a lower camera 12-2). The "main body" of the gate device 10 is a structure forming the center of the gate device 10, and is a member that is in contact with the floor and to which a face authentication module and the like are attached.

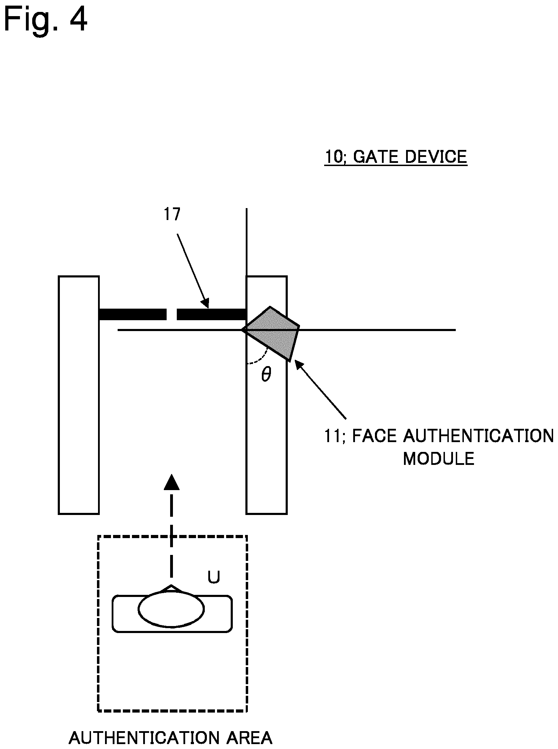

The face authentication module 11 is installed to be inclined at a predetermined angle with respect to the direction in which the user walks toward the gate device 10. Fig. 4 is a view (plan view) illustrating a case where the gate device 10 is viewed from above.

As illustrated in Fig. 4, the face authentication module 11 is installed at an angle $\theta$ with respect to the traveling direction of the user (a direction perpendicular to the gate 17). The angle $\theta$ is selected (adjusted) in such a way that the upper camera 12-1 and the lower camera 12-2 can image the user U in the authentication area.

When the angle $\theta$ is reduced, only the vicinity of the gate device 10 can be imaged, and there is a possibility that the user enters the inside (internal area) of the gate device 10 before the authentication process using the face image is ended. In this case, the user is required to stop and stand by until the authentication process is completed, and it cannot be said that comfortable walk-through can be achieved. On the other hand, when the angle $\theta$ is increased, it is possible to capture an image far away from the gate device 10. In this case, although it is advantageous for achieving a comfortable walk-through, there is a possibility that even a user who is not walking toward the gate device may be authenticated. For example, in the example of Fig. 2, the gate device 10-1 captures an image of a user who is not walking toward gate device 10-1, and requests the server device 20 for authentication. As described above, when the angle $\theta$ is too large, there is a possibility that the useless authentication process occurs. It is desirable that the administrator and the operator of the system determine the optimum angle in consideration of the advantages and disadvantages caused by the setting angle $\theta$ of the face authentication module 11 as described above. As a result of intensive studies by the inventors, it has been found that the angle $\theta$ is desirably selected from a range of 30 to 60 degrees.

Although Figs. 3 and 4 illustrate an example in which the face authentication module 11 is installed on the right side with respect to the traveling direction of the user, it is a matter of course that the installation position of the face authentication module 11 is not limited to the right side. The face authentication module 11 may be installed on the left side with respect to the traveling direction of the user. Although Figs. 3 and 4 illustrate an example in which the face authentication module 11 is directly installed in the main body of the gate device 10, the face authentication module 11 may be installed away from the main body of the gate device 10. Alternatively, when the gate device 10 includes the ceiling portion (roof; not illustrated), the face authentication module 11 may be installed on the ceiling portion. The face authentication module 11 may be installed at a predetermined angle with respect to the traveling direction of the user.

The upper camera 12-1 is attached to the vertically upper side of the face authentication module 11. The lower camera 12-2 is attached to the vertically lower side of the face authentication module 11. That is, as illustrated in Fig. 3, the lower camera 12-2 is installed below the upper camera 12-1 in the vertical direction.

On the surface (camera installation face) of the face authentication module, the positions of the two cameras in the vertical direction (vertical direction) are different as described above, but are attached at the same position in the horizontal direction (horizontal position). Similarly, in the depth direction of the two cameras, the two cameras are mounted on the same surface (camera installation face). The meaning of "the positions of the two cameras in the horizontal direction are the same" does not mean that the positions of the two cameras in the horizontal direction strictly coincide with each other, but allows some deviation. That is, the positions of the two cameras in the horizontal direction may be substantially the same.

The upper camera 12-1 and the lower camera 12-2 are cameras having substantially the same performance, and parameters such as an angle of view and a focal distance are substantially the same. According to the method of installing the two cameras or the like as described above, the images obtained from the two cameras have different photographing ranges in the height direction, but have substantially the same photographing ranges in the horizontal direction.

Two cameras (upper camera 12-1 and lower camera 12-2) included in gate device 10 are provided to authenticate every person (subject) with a short height to a high height. The upper camera 12-1 is installed to acquire a face image of a tall person to be authenticated. The lower camera 12-2 is installed to acquire a face image of a short person to be authenticated.

With these cameras, the face image of the tall person to be authenticated is acquired by the upper camera 12-1, and the face image of the short person to be authenticated is acquired by the lower camera 12-2. The face image of the medium-height person to be authenticated is acquired from both the upper camera 12-1 and the lower camera 12-2. Most of the users are classified as medium height, and it is rare that a face image is acquired from one of the upper camera 12-1 and the lower camera 12-2.

The upper camera 12-1 and the lower camera 12-2 operate in conjunction with each other. Specifically, the two cameras image the user at substantially the same timing.

As illustrated in Fig. 3, the face authentication module 11 includes a light emitting diode (LED) (not illustrated) for dimming and a display 13. The gate device 10 controls an environment (light irradiated to the user) at the time of acquiring the user's face image using the LED for dimming. Gate device 10 notifies the user of a necessary message or the like by using display 13. For example, the gate device 10 displays a result of authentication (authentication succeeded, authentication failed) by the server device 20.

The gate device 10 includes a display 14. Gate device 10 notifies the user of a necessary message or the like by using the display 14. For example, the gate device 10 displays a result of authentication (authentication succeeded, authentication failed) by the server device 20. Alternatively, the gate device 10 may notify the user of a necessary message by using a speaker (not illustrated).

The gate device 10 includes an area sensor 15. The area sensor 15 is a sensor that detects whether a person is present in a predetermined area (an area surrounded by a dotted line in Fig. 3) set in front of the gate device 10. The area sensor 15 can be configured using a sensor (so-called motion sensor) using infrared rays.

When confirming that a person is present in the predetermined area based on the detection signal from the area sensor 15, the gate device 10 controls two cameras (upper camera 12-1 and lower camera 12-2) to acquire two images (image data). In the following description, an area where the area sensor 15 detects the presence of a person is referred to as an "authentication area". When detecting that the user is present in the authentication area, the gate device 10 captures an image of the user located in the authentication area.

The gate device 10 includes an in-gate sensor 16. The in-gate sensor 16 is a sensor that detects that a person enters the inside of the gate device (gate device 10). As the in-gate sensor 16, for example, a sensor (so-called passage sensor using light) including an optical transmission device and an optical reception device can be used. For example, the optical transmission device and the optical reception device are installed to face each other (two devices are installed in an inner wall of the main body). The transmission device constantly transmits light, and the reception device receives the transmitted light. The gate device 10 determines that a person enters gate device 10 when the reception device cannot receive the light. Fig. 3 illustrates one of the two devices constituting the in-gate sensor 16. A plurality of pairs of the in-gate sensors 16 may be provided at substantially equal intervals in the traveling direction of the person.

The gate device 10 includes a gate 17. When confirming that the user is present in the authentication area, the gate device 10 acquires a face image of the user. The gate device 10 generates a feature amount (biological information) from the acquired image to transmit an authentication request including the generated feature amount to the server device 20. The gate device 10 opens the gate 17 when the authentication successful person enters the internal area of the gate device. The gate device 10 closes the gate 17 after the authentication successful person passes through the gate 17.

The type of the gate 17 is not particularly limited, and is, for example, a flapper gate in which a flapper provided from one side or both sides of the passage opens and closes, a turn coil gate in which three bars rotate, or the like.

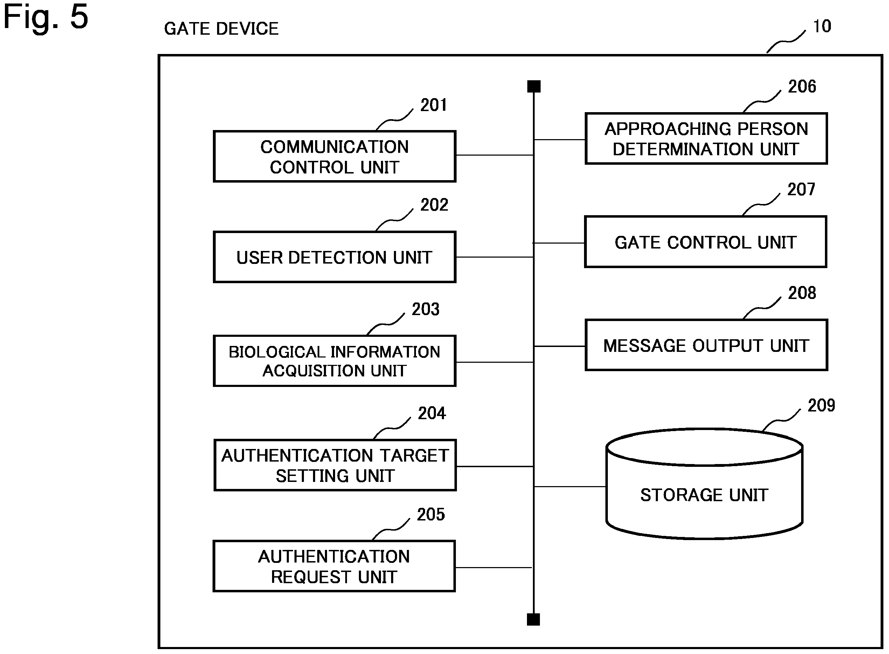

Fig. 5 is a diagram illustrating an example of a processing configuration (processing module) of the gate device 10 according to the first example embodiment. Referring to Fig. 5, the gate device 10 includes a communication control unit 201, a user detection unit 202, a biological information acquisition unit 203, an authentication target setting unit 204, an authentication request unit 205, an approaching person determination unit 206, a gate control unit 207, a message output unit 208, and a storage unit 209.

The communication control unit 201 is a means configured to control communication with another device. Specifically, the communication control unit 201 receives data (packet) from the server device 20. The communication control unit 201 transmits data to the server device 20. The communication control unit 201 delivers data received from another device to another processing module. The communication control unit 201 transmits data acquired from another processing module to another device. In this manner, the other processing modules transmit and receive data to and from another device via the communication control unit 201.

The user detection unit 202 is a means configured to detect a user located in the authentication area. The user detection unit 202 detects a user present in the authentication area based on a detection signal from the area sensor 15. In a case where the output of the area sensor 15 indicates that "there is a user in the authentication area", the user detection unit 202 notifies the biological information acquisition unit 203 of the fact.

The biological information acquisition unit 203 is a means configured to acquire the biological information about the user present in the authentication area. Upon acquiring the notification related to "there is a user in the authentication area" from the user detection unit 202, the biological information acquisition unit 203 controls the two cameras (upper camera 12-1 and lower camera 12-2) and captures an image of the user located in the authentication area.

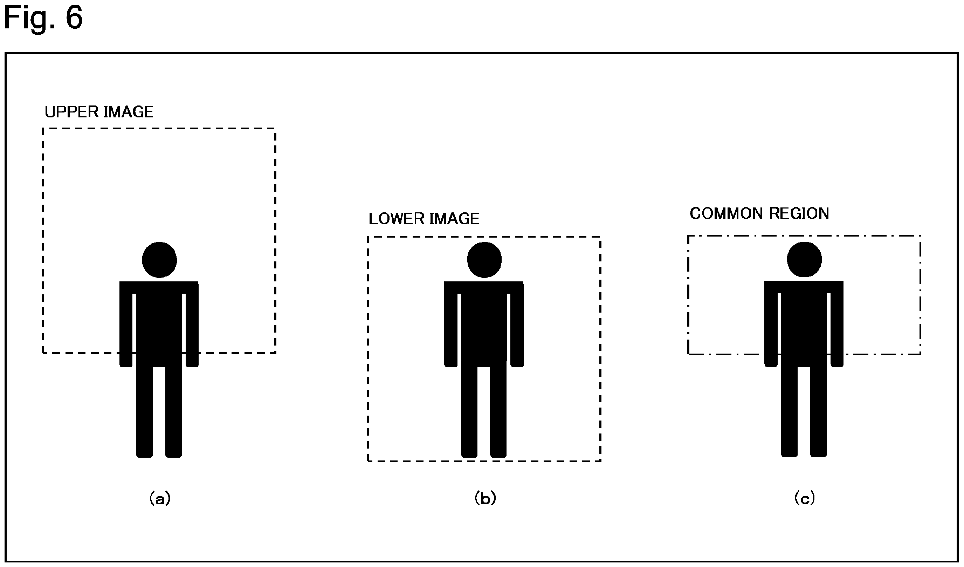

The biological information acquisition unit 203 acquires an image from each of the two cameras. As described above, the upper camera 12-1 is attached to the upper side of the face authentication module 11. Therefore, the image (hereinafter, it is referred to as an upper image) obtained from the upper camera 12-1 includes the upper side of the authentication area. For example, when a medium-height user is located in the authentication area, an upper image surrounded by a broken line in Fig. 6A is obtained.

On the other hand, the lower camera 12-2 is attached to the lower side of the face authentication module 11. Therefore, the image (hereinafter, it is referred to as a lower image) obtained from the lower camera 12-2 includes the lower side of the authentication area. For example, when a medium-height user is located in the authentication area, a lower image surrounded by a broken line in Fig. 6B is obtained.

The upper image and the lower image include a common region. In the example of Fig. 6, a region indicated by a dot-and-dash line in Fig. 6C is a region common to the upper image and the lower image. In the following description, a region common to the upper image and the lower image is referred to as a "common region".

The biological information acquisition unit 203 delivers two images (upper image, lower image) captured by the upper camera 12-1 and the lower camera 12-2 to the authentication target setting unit 204.

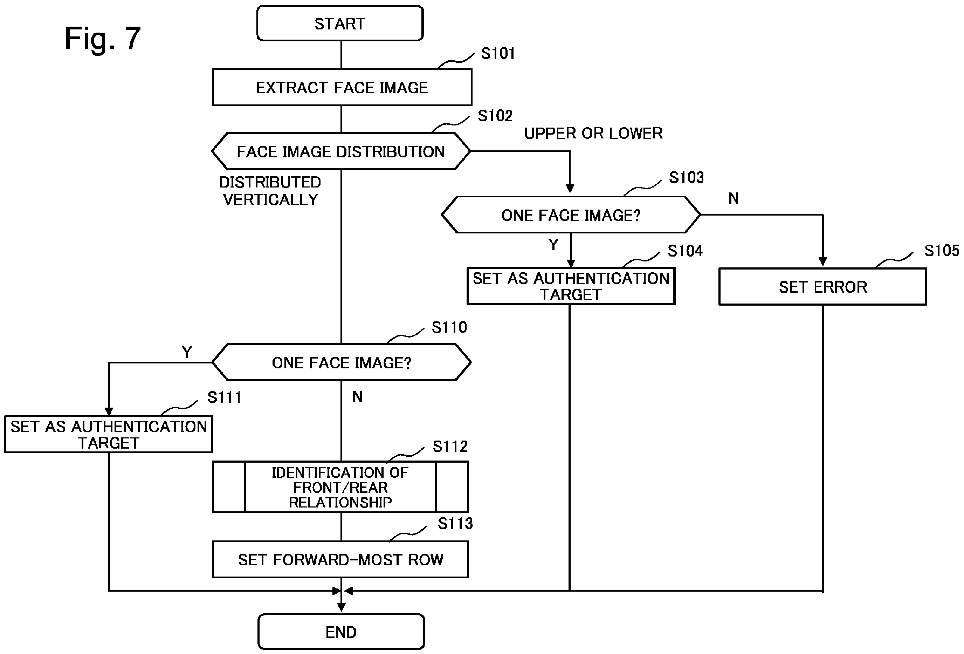

The authentication target setting unit 204 is a means configured to set (determine) a user (person to be authenticated) to be authenticated from users appearing in an image. When there is a plurality of users in the authentication area, the authentication target setting unit 204 selects one user from the plurality of users and sets the selected user as the "person to be authenticated". The operation of the authentication target setting unit 204 will be described with reference to the flowchart illustrated in Fig. 7.

The authentication target setting unit 204 extracts a face image (step S101). The authentication target setting unit 204 extracts a face image from the upper image. The authentication target setting unit 204 extracts a face image from the lower image. The authentication target setting unit 204 extracts a face image from the image using various methods. For example, the authentication target setting unit 204 extracts a face image (face region) from the image data using a learning model learned by a convolutional neural network (CNN). Alternatively, the authentication target setting unit 204 may extract the face image using a method such as template matching.

The authentication target setting unit 204 determines the distribution status of the face images in the two images (step S102). The authentication target setting unit 204 determines whether the face image is included only in the upper image or the lower image or whether the face image is included in both the upper image and the lower image. In the former case, the process in and after step S103 is performed. In the latter case, the process in and after step S110 is performed.

When step S102 is performed and it is determined that the face image is distributed in the upper image or the lower image, the authentication target setting unit 204 determines whether the number of face images included only in the upper image or the lower image is one (step S103).

When one face image is included in the upper image or the lower image (step S103: Yes branch), the authentication target setting unit 204 sets the one face image as the authentication target (step S104).

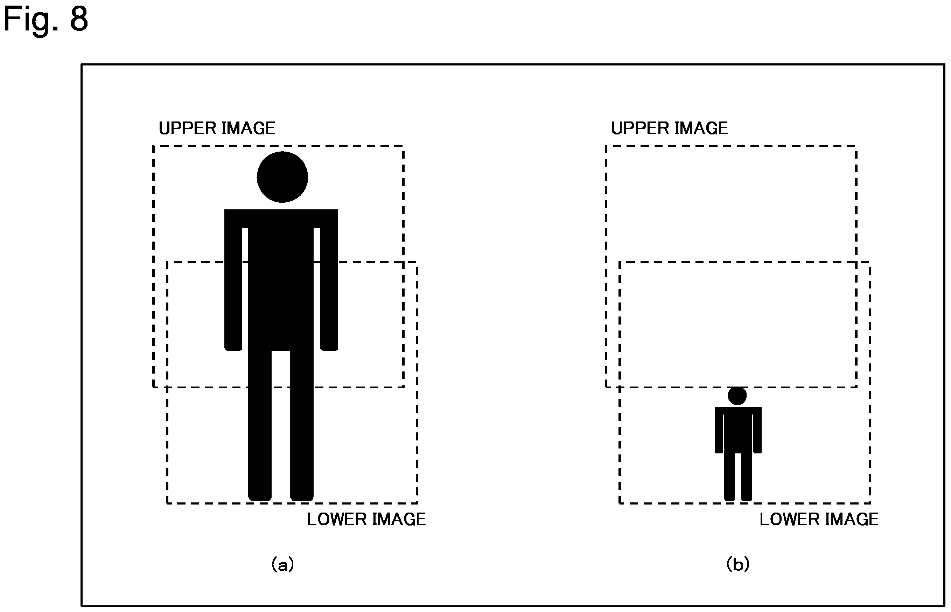

For example, as illustrated in Fig. 8A, the face image of the tall person to be authenticated is included only in the upper image. As illustrated in Fig. 8B, the face image of the short person to be authenticated is included only in the lower image. In the case illustrated in Fig. 8, the authentication target setting unit 204 sets the face image included in the upper image and the face image included in the lower image as the authentication target (the face image of the person to be authenticated). In the drawings including Fig. 8, the range of each image is horizontally moved in order to facilitate distinction between the upper image and the lower image.

When two or more face images are included in the upper image or the lower image (step S103: No branch), the authentication target setting unit 204 sets an error (step S105).

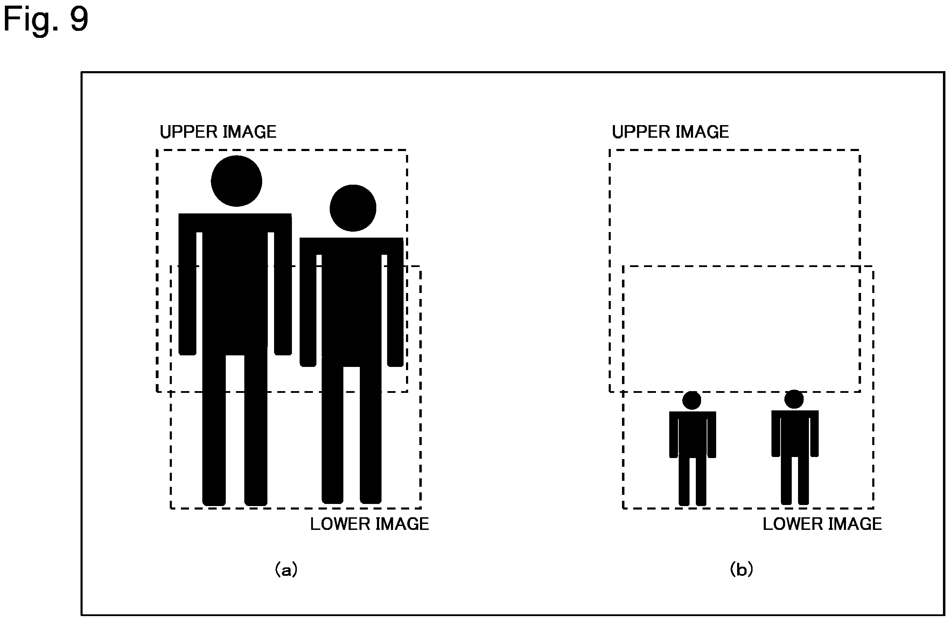

For example, as illustrated in Figs. 9A and 9B, an error is set when a plurality of face images is included only in the upper image or the lower image. In the case illustrated in Fig. 9, it is difficult to determine which of the plurality of face images is set as the authentication target. However, the situation illustrated in Fig. 9 rarely occurs. When such a situation occurs, the gate device 10 takes a measure such as instructing the user to leave the authentication area.

As described above, in a case where the face image is distributed in each of the upper image and the lower image, the process in and after step S110 illustrated in Fig. 7 is performed.

The authentication target setting unit 204 determines whether one face image is included in each of the upper image and the lower image (step S110).

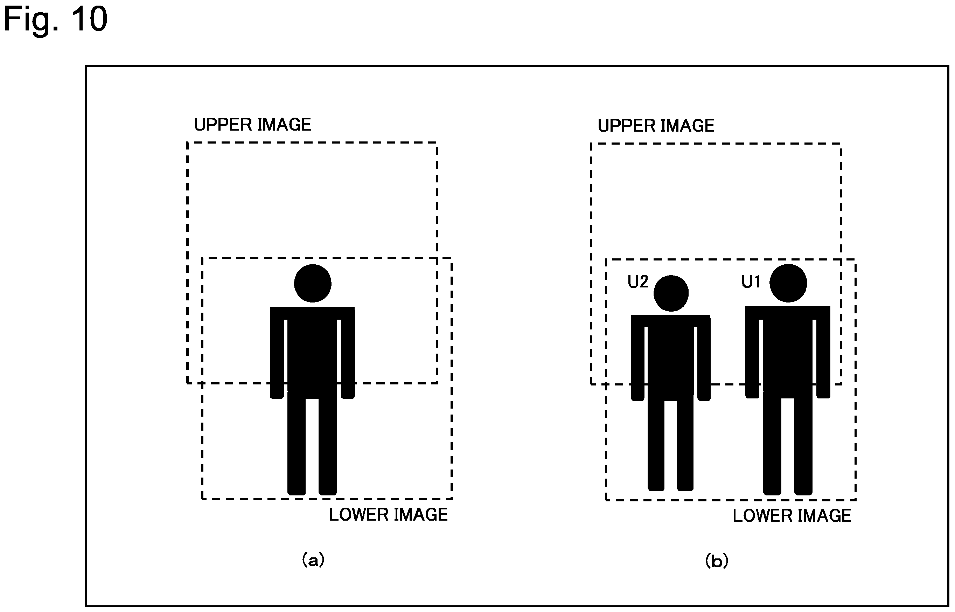

Specifically, the authentication target setting unit 204 determines whether a situation as illustrated in Fig. 10A has occurred or a situation as illustrated in Fig. 10B has occurred.

When one face image is included in each of the upper image and the lower image (step S110: Yes branch), the authentication target setting unit 204 sets a face image included in either the upper image or the lower image as the authentication target (step S111). In the example of Fig. 10A, a face image extracted from either the upper image or the lower image is set as the authentication target.

When two or more face images are included in each of the upper image and the lower image (step S110: No branch), the authentication target setting unit 204 identifies the front/rear relationship of each user (step S112). In the example of Fig. 10B, which of the user U1 and the user U2 is walking in front is identified (determined). Details regarding the identification process of the front/rear relationship will be described later.

The authentication target setting unit 204 sets a user in the forward-most row (the forefront) among a plurality of users (a plurality of users present in the authentication area) as the authentication target (step S113). In the example of Fig. 10B, in a case where the user U1 is walking in front of the user U2 (in a case where the user U1 is closer to the gate device 10 than the user U2), the face image of the user U1 is set as the authentication target.

As described above, when one user appears in both the upper image and the lower image, the authentication target setting unit 204 sets the one user as the person to be authenticated. When one user appears in one of the upper image and the lower image, the authentication target setting unit 204 sets the one user as the person to be authenticated.

The authentication target setting unit 204 desirably confirms whether the users appearing in the upper image and the lower image are identical before setting the authentication target in step S111. Specifically, the authentication target setting unit 204 calculates the feature amount from each of the two face images. The authentication target setting unit 204 determines whether the two feature amounts substantially match. The authentication target setting unit 204 calculates similarity between two feature amounts (feature vectors). When the calculated similarity is equal to or more than a predetermined value, the authentication target setting unit 204 determines that the two feature amounts substantially match. That is, the authentication target setting unit 204 determines whether the two face images are the face image of the identical person by one-to-one collation using the feature amounts generated from the upper face image and the lower face image. When the two feature amounts do not match, the authentication target setting unit 204 may set an error. That is, a situation in which one face image is included in each of the upper image and the lower image and each face image is not the face image of the identical person does not usually occur. Therefore, it is appropriate to set the situation as an error.

In a case where there are one person to be authenticated with a high height and one person to be authenticated with a short height in the authentication area, the processing related to step S112 is performed. However, in this case, since there is no common region between the upper image and the lower image, the front/rear relationship in step S112 cannot be identified. Therefore, when the above situation occurs, the authentication target setting unit 204 sets an error.

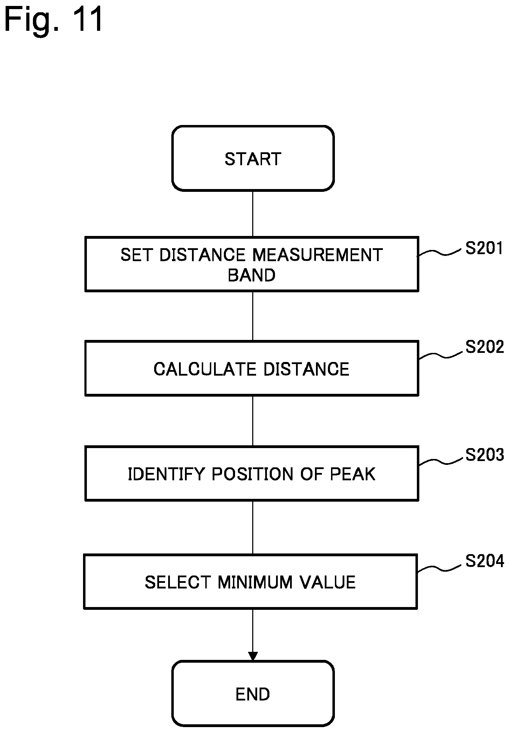

Next, the process (the identification process of the front/rear relationship) according to step S112 in Fig. 7 will be described. Fig. 11 is a flowchart illustrating an example of the front/rear relationship identification process of the authentication target setting unit 204.

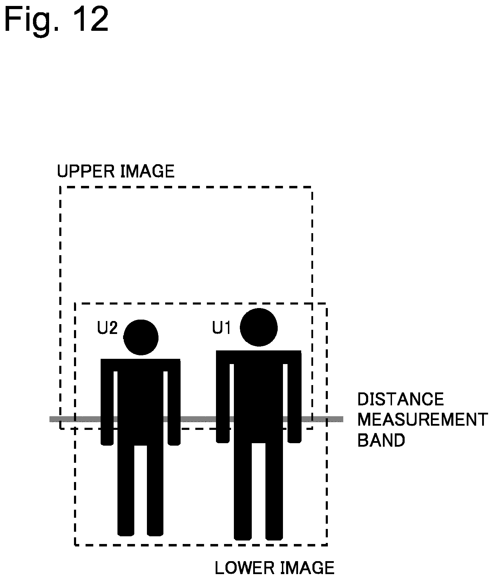

The authentication target setting unit 204 sets a "distance measurement band" in the common region of the two images (upper image, lower image) (step S201). For example, in a case where the upper image and the lower image illustrated in Fig. 12 are obtained, the region colored in gray is set as the "distance measurement band". As illustrated in Fig. 12, the distance measurement band is desirably set on the lower side of the upper image. The distance measurement band is set to a region in which two or more users simultaneously appear in the common region. In an extreme example, the distance measurement band may be set at the lowermost stage of the upper image, or the entire common region may be set as the distance measurement band. The authentication target setting unit 204 sets all or part of the upper image and the lower image in the distance measurement band.

The authentication target setting unit 204 calculates the distance to the camera installation face for the target object appearing in the distance measurement band (all or part of the common region common to the upper image and the lower image) (step S202). Specifically, the authentication target setting unit 204 calculates the distance to the camera (upper camera 12-1 and lower camera 12-2) installation face for each small region included in the distance measurement band. The authentication target setting unit 204 calculates the distance between each small region (target object) and the camera installation face using the parallax (deviation between upper image and lower image) of the two images.

The authentication target setting unit 204 calculates a deviation amount (parallax) between the upper image and the lower image regarding the target object included in the distance measurement band. The authentication target setting unit 204 calculates the distance between the target object and the camera installation face using the calculated parallax. That is, the authentication target setting unit 204 calculates the distance between the camera installation face and the target object (small region of the distance measurement band) using a so-called stereo method. Although the calculation of the distance using the stereo method is obvious to those skilled in the art and detailed description is omitted, the authentication target setting unit 204 calculates the distance between the camera installation face and the target object by the following method.

The authentication target setting unit 204 divides the distance measurement band into a plurality of small regions. For example, the authentication target setting unit 204 divides the distance measurement band such that the size of one region is A1 × A2 pixels. The authentication target setting unit 204 calculates the distance D between the small region (target object) and the camera installation face by the following Expression (1).

[Math. 1]

$$D = B \times f/Z$$

$$\cdots (1)$$

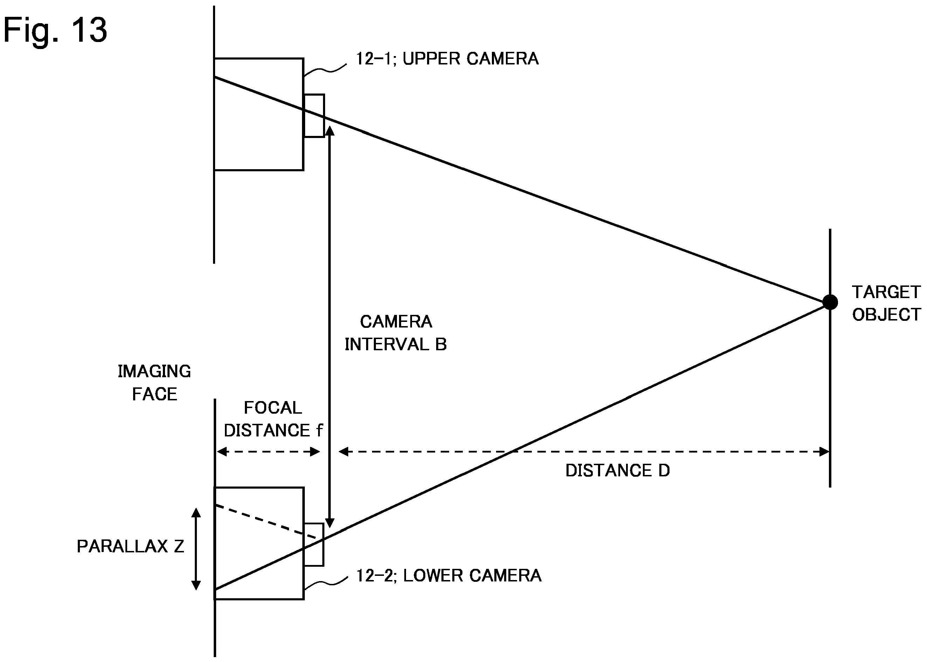

In Expression (1), B is a distance (camera interval) between the upper camera 12-1 and the lower camera 12-2. f is a focal distance of the two cameras. Z is parallax (deviation amount). Fig. 13 illustrates the relationship between the parameters expressed by Expression (1).

In Expression (1), the camera interval B and the focal distance f are values determined in advance according to the installation and selection of the two cameras. Therefore, the authentication target setting unit 204 can calculate the distance D by obtaining the parallax Z.

The authentication target setting unit 204 searches for a region in which patterns match in a small region forming a common region band of the reference camera (the upper camera 12-1) with respect to one small region in the image (distance measurement band) of the reference camera (the lower camera 12-2 in Fig. 13). For example, the authentication target setting unit 204 calculates a city block distance for each small region, and selects a region having the shortest distance as a region in which the patterns match. The authentication target setting unit 204 calculates a deviation between a small region on the reference camera side and a small region on the reference camera side selected as described above as the parallax Z.

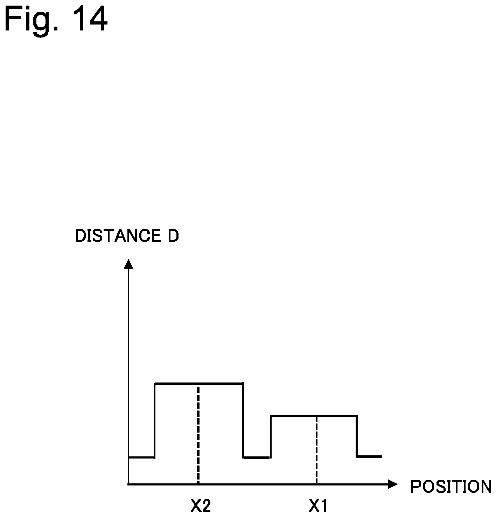

For example, when the distance D between the target object included in the distance measurement band illustrated in Fig. 12 and the camera installation face is calculated, and the position (position in the horizontal direction) of the target object is set to the X axis and the calculated distance D is set to the Y axis, a graph as illustrated in Fig. 14 is obtained.

In order to obtain a waveform as illustrated in Fig. 14, the authentication target setting unit 204 desirably performs a predetermined data process or the like on the calculated distance D. For example, in order to remove a high frequency component (a high frequency component of the distance D) caused by noise included in the image, the authentication target setting unit 204 may apply a low pass filter (LPF) to the calculated distance D. Alternatively, in a case where the variation of the distance D falls within a predetermined range, the authentication target setting unit 204 may perform a process of converging respective values of the distance D to a predetermined value (for example, the average value of the variation values).

As illustrated in Fig. 14, when a plurality of users is imaged by the upper camera 12-1 and the lower camera 12-2, peaks according to the number of people appearing in the two images appear. In the examples of Figs. 12 and 14, two peaks appear.

The authentication target setting unit 204 identifies a position (X coordinate) where each peak appears (step S203). In the example of Fig. 14, coordinates X1 and X2 are identified. That is, the authentication target setting unit 204 identifies (searches for) peaks according to the number of the plurality of users in the position of the target object (the position of the target object in the image) and the distance (for example, a graph of Fig. 14 illustrating the relationship between the position and the distance) to the camera installation face for the target object.

The authentication target setting unit 204 identifies the peak of the distance D using any method. For example, the authentication target setting unit 204 calculates a difference between data regarding the distance D, and sets a point at which the calculated difference changes from positive to negative as a peak. It is desirable that the authentication target setting unit 204 identify the peak from the data to which the filtering process or the convergence process is applied.

The authentication target setting unit 204 selects the X coordinate related to the minimum peak value (step S204). The user (face image) located on the vertically upper side of the selected X coordinate is identified as the person in the forward-most row of the authentication area. In the examples of Figs. 12 and 14, the user U1 located above the coordinate X1 is identified as the user in the forward-most row. That is, the authentication target setting unit 204 regards a user at the position related to the minimum peak value among the plurality of identified peaks as the user in the forward-most row.

The authentication target setting unit 204 sets the face image of the user in the forward-most row as the authentication target (step S113 in Fig. 7). As described above, in a case where a plurality of users appears in both the upper image and the lower image, the authentication target setting unit 204 calculates the distance between each of the plurality of users and the camera installation face to identify a user in the forward-most row from among the plurality of users. The authentication target setting unit 204 sets the identified user as a person to be authenticated.

The authentication target setting unit 204 delivers the face image (biological information) of the person to be authenticated to the authentication request unit 205.

The authentication request unit 205 is a means configured to request the server device 20 to authenticate the person to be authenticated. The authentication request unit 205 generates a feature amount (a feature vector including a plurality of feature amounts) from the face image acquired from the biological information acquisition unit 203. The authentication request unit 205 transmits an authentication request including the generated feature amount (biological information) to the server device 20.

An existing technique can be used for the feature amount generation process by the authentication request unit 205, and thus a detailed description thereof will be omitted. For example, the authentication request unit 205 extracts eyes, a nose, a mouth, and the like as feature points from the face image. Thereafter, the authentication request unit 205 calculates the position of each feature point and the distance between the feature points as feature amounts to generate a feature vector (vector information characterizing the face image) including a plurality of feature amounts.

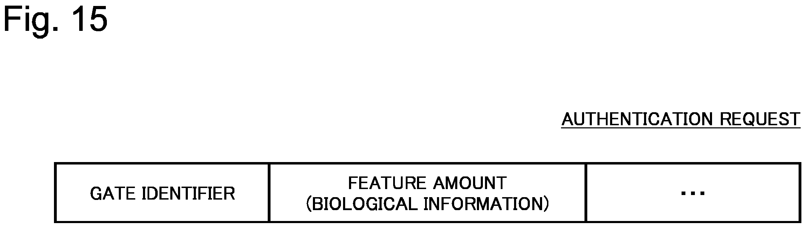

The authentication request unit 205 generates an authentication request including an identifier (hereinafter, referred to as a gate identifier) of the gate device, a feature amount, and the like (see Fig. 15). As the gate identifier, a media access control (MAC) address or an Internet protocol (IP) address of the gate device 10 can be used.

When transmitting the authentication request to the server device 20, the authentication request unit 205 delivers the feature amount included in the request to the approaching person determination unit 206.

The authentication request unit 205 receives a response to the authentication request from the server device 20. The authentication request unit 205 delivers a response (authentication succeeded, authentication failed) from the server device 20 to the gate control unit 207.

The approaching person determination unit 206 is a means configured to detect an approaching person using an in-gate sensor 16 that detects an approaching person into the gate device (gate device 10) and determines whether the approaching person and the person to be authenticated are identical. The approaching person determination unit 206 monitors (polls) the output of the in-gate sensor 16. When the output of the in-gate sensor 16 indicates "there is an approaching person inside", the approaching person determination unit 206 determines whether the approaching person and the person to be authenticated match. Specifically, similarly to the biological information acquisition unit 203, the approaching person determination unit 206 controls at least one camera to acquire a face image. The approaching person determination unit 206 calculates a feature amount (a feature amount of an approaching person) from the obtained face image.

The approaching person determination unit 206 determines whether the calculated feature amount (the feature amount of the approaching person) and the feature amount (the feature amount of the person to be authenticated) acquired from the authentication request unit 205 substantially match. Specifically, the approaching person determination unit 206 calculates the similarity between the two feature amounts. A chi-square distance, a Euclidean distance, or the like can be used as the similarity. The similarity is lower as the distance is longer, and the similarity is higher as the distance is shorter. When the similarity is equal to or more than a predetermined value, the approaching person determination unit 206 determines that the two feature amounts substantially match (the approaching person and the person to be authenticated are identical).

In this manner, the approaching person determination unit 206 detects an approaching person based on the detection signal from the passage sensor (the in-gate sensor 16) using light. Thereafter, the approaching person determination unit 206 performs one-to-one collation using two feature amounts (feature amount of approaching person, feature amount of person to be authenticated). Whether the approaching person and the person to be authenticated are identical is determined by the one-to-one collation (one-to-one collation using the biological information about the approaching person and the biological information about the person to be authenticated).

When determining that the approaching person and the person to be authenticated are identical, the approaching person determination unit 206 notifies the gate control unit 207 of the determination.

The gate control unit 207 is a means configured to control the gate 17 included in the gate device 10. The gate control unit 207 controls the gate 17 based on the result of authentication of the person to be authenticated. The gate control unit 207 opens the gate 17 when the result of authentication of the server device 20 is "authentication succeeded" and the approaching person and the person to be authenticated are identical. In other words, in principle, the gate control unit 207 does not open the gate 17 unless the above condition (authentication succeeded, the approaching person and the person to be authenticated are identical) is satisfied. The gate control unit 207 closes the gate 17 after a user permitted to pass by using a distance sensor or the like passes through the gate 17.

The message output unit 208 is a means configured to output a message to be notified to the user (person to be authenticated, authentication successful person, etc.). The message output unit 208 notifies the user of a necessary message using the displays 13 and 14, a speaker, or the like.

The storage unit 209 is a means configured to store information necessary for the operation of the gate device 10.

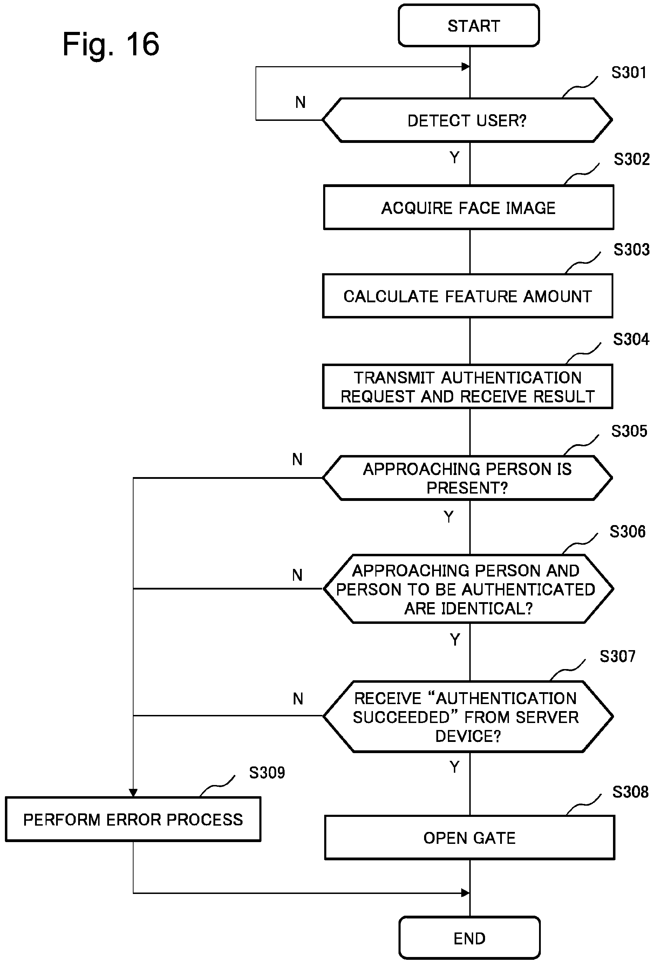

Fig. 16 is a flowchart illustrating an example of the operation of the gate device 10 according to the first example embodiment.

Gate device 10 detects whether the user is present in the authentication area (step S301). When the user is not detected in the authentication area (step S301: No branch), the gate device 10 repeats the process in step S301.

When the user is detected (step S301: Yes branch), the gate device 10 images the user located in the authentication area and acquires the face image (step S302).

Gate device 10 calculates a feature amount from the face image (step S303).

The gate device 10 transmits an authentication request including the calculated feature amount to the server device 20, and receives a response (result of authentication) to the authentication request (step S304).

Gate device 10 determines whether an approaching person is present in the internal area of the gate device (step S305). When the approaching person cannot be detected even after the lapse of the predetermined time from the start of the process of detecting the approaching person (step S305: No branch), the gate device 10 performs the process related to step S309.

When the approaching person is detected during the predetermined period (step S305: Yes branch), the gate device 10 determines whether the approaching person and the person to be authenticated are identical (step S306). When the approaching person and the person to be authenticated are not identical (step S306: No branch), the gate device 10 performs the process related to step S309.

When the approaching person and the person to be authenticated are identical (step S306: Yes branch), the gate device 10 determines whether the result of authentication acquired from the server device 20 is "authentication succeeded" (step S307). When the result of authentication is "authentication failed", the gate device 10 performs the process related to step S309. It is a matter of course that the process related to step S307 may be performed before the process related to step S305.

When the result of authentication is "authentication succeeded", the gate device 10 opens the gate 17 (step S308). When a gate opening condition (authentication succeeded, and the approaching person and the person to be authenticated are identical) is satisfied, the gate device 10 controls the gate 17 in such a way that the person to be authenticated is permitted to pass through. At this time, the gate device 10 may display on displays 13 and 14 that the authentication of the person to be authenticated has succeeded.

When the above condition is not satisfied (No branch in any of steps S305, S306, and S307), the gate device 10 performs an error process (step S309). Specifically, when the approaching person cannot be detected during the predetermined period (step S305: No branch), the gate device 10 discards the result of authentication acquired from the server device 20. When the approaching person and the person to be authenticated are different (step S306: No branch), the gate device 10 displays the fact on the displays 13, 14. When the authentication by the server device 20 fails (step S307: No branch), the gate device 10 displays the fact on the displays 13, 14.

In this way, the gate device 10 acquires the biological information (face image) about the users with a short height to a high height using the two cameras (upper camera 12-1 and lower camera 12-2) installed vertically. The gate device 10 uses the parallax of the target object commonly appearing in the images obtained from the two cameras, determines the front/rear relationship in a case where a plurality of users is imaged, and identifies the correct person to be authenticated. That is, the gate device 10 uses the two cameras to acquire biological information from users having greatly different heights without omission, and prevents erroneous determination for the person to be authenticated.

[Server device]

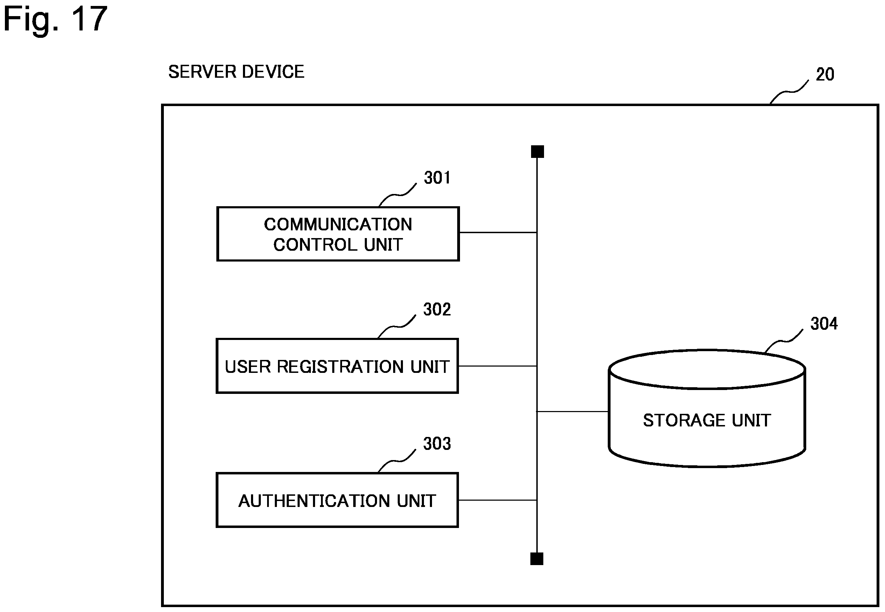

Fig. 17 is a diagram illustrating an example of a processing configuration (processing module) of the server device 20 according to the first example embodiment. Referring to Fig. 17, the server device 20 includes a communication control unit 301, a user registration unit 302, an authentication unit 303, and a storage unit 304.

The communication control unit 301 is a means configured to control communication with another device. Specifically, communication control unit 301 receives data (packet) from the gate device 10. The communication control unit 301 transmits data to the gate device 10. The communication control unit 301 delivers data received from another device to another processing module. The communication control unit 301 transmits data acquired from another processing module to another device. In this manner, the another processing module transmits and receives data to and from the another device via the communication control unit 301.

The user registration unit 302 is a means configured to perform system registration of a user (system user) who is permitted to pass through the gate device 10. The user registration unit 302 acquires biological information (for example, a face image) and personal information (for example, the name) of a user who is permitted to pass through the gate device 10 using any means.

For example, in a case where the gate device 10 is a device installed at an airport, the system user inputs biological information and personal information (name, passport number, etc.) to the server device 20 using a web page of an airline company or a kiosk terminal installed at the airport. Alternatively, in a case where the gate device 10 is a device installed at a ticket gate of a station, the system user inputs biological information, personal information, and the like to the server device 20 from a web page of a railway company or the like or a terminal installed at a station.

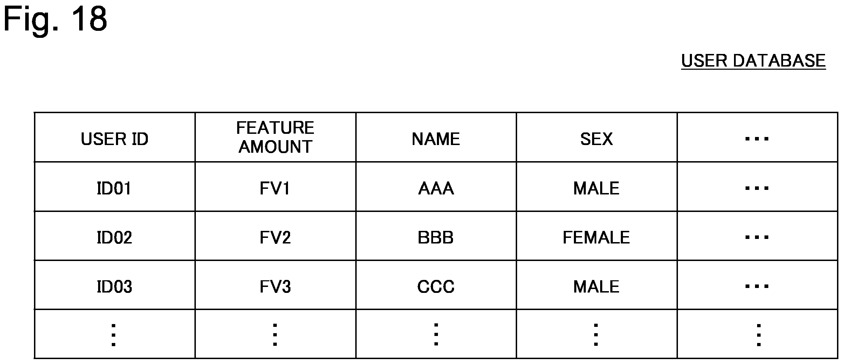

When acquiring a face image, the user registration unit 302 calculates a feature amount from the face image. The user registration unit 302 registers the biological information (for example, the feature amount calculated from the face image) of the system user in the "user database". The user registration unit 302 registers, in the user database as necessary, a user identifier (ID) for identifying the system user, and personal information (for example, name, nationality, gender, and the like) in association with biological information (see Fig. 18). The user database illustrated in Fig. 18 is an example, and other items may be stored in association with the biological information (feature amount). For example, a "face image" may be registered in the user database.

Authentication unit 303 is a means configured to process the authentication request received from the gate device 10. Specifically, the authentication unit 303 sets the biological information (feature amount) included in the authentication request as the collation target, and performs the collation process with the biological information registered in the user database.

More specifically, the authentication unit 303 sets the feature amount extracted from the authentication request as the collation target, and performs one-to-N (N is a positive integer, and the same applies hereinafter) collation with the plurality of feature amounts registered in the user database.

The authentication unit 303 calculates similarity between the feature amount (feature vector) to be collated and each of the plurality of feature amounts registered. The authentication unit 303 sets the result as "authentication succeeded" if the feature amount whose similarity is equal to or more than the predetermined value is registered in the user database. The authentication unit 303 sets the result as "authentication failed" if the feature amount whose similarity is equal to or more than the predetermined value is not registered in the user database.

The authentication unit 303 identifies a feature amount whose similarity with the feature amount of the collation target is equal to or more than a predetermined value and is the highest among the plurality of feature amounts registered in the user database. The authentication unit 303 transmits the user ID and the personal information related to the identified feature amount to another module and the gate device 10 as necessary. For example, in a case where the gate device 10 is a device installed in an airport, the progress (check-in passage, security check passage, etc.) of the procedure is managed using the information (name, passport number, etc.) identified by the authentication unit 303. For example, in a case where gate device 10 is a device installed at a ticket gate of a station, the fare payment process or the like is performed using the identified information.

The storage unit 304 stores various types of information necessary for the operation of the server device 20. In the storage unit 304, a user database is constructed.

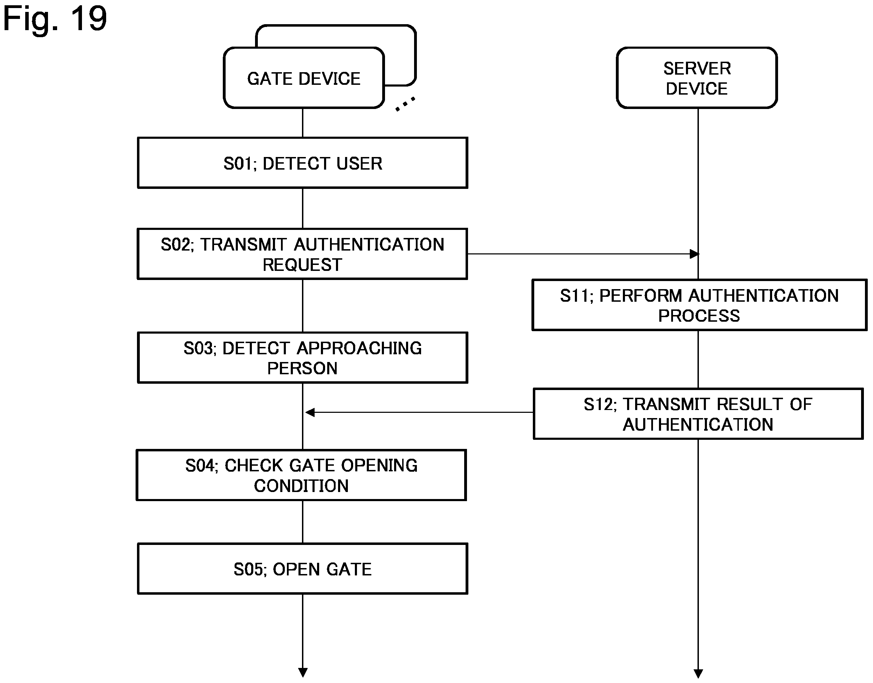

Fig. 19 is a sequence diagram illustrating an example of the operation of the authentication system according to the first example embodiment. It is assumed that the system user is registered in advance prior to the operation of Fig. 19.

Gate device 10 detects the user located in the authentication area (step S01). The gate device 10 may take a measure such that the user can recognize that the authentication process is being performed when the person to be authenticated is detected. For example, the gate device 10 may display the face image of the person to be authenticated on the displays 13 and 14. Alternatively, the gate device 10 may display, on displays 13 and 14, a message or a symbol (for example, an arrow or the like) prompting the user to enter the internal area of the gate device 10 from the authentication area.

Gate device 10 acquires the biological information about the person to be authenticated (the user located in the authentication area) to transmit an authentication request including the biological information to the server device 20 (step S02).

The server device 20 performs the authentication process using the biological information included in the authentication request and the biological information registered in the user database (step S11).

The server device 20 transmits the result of authentication (authentication succeeded, authentication failed) to the gate device 10 (step S12).

The gate device 10 determines whether the person to be authenticated enters the area in parallel with the authentication process of the server device 20 (detection of the approaching person; step S03).

Gate device 10 checks whether a condition for opening the gate 17 (gate opening condition) is satisfied (step S04). Specifically, the gate device 10 checks whether the authentication succeeds and whether the approaching person and the person to be authenticated are identical.

When the gate opening condition is satisfied, the gate device 10 opens the gate 17 (step S05).

As described above, the authentication system according to the first example embodiment identifies the person to be authenticated in a case where a plurality of persons (candidates of the system user and the person to be authenticated) appear in images obtained from two cameras (upper camera 12-1 and lower camera 12-2). At this time, the gate device 10 calculates the distance between each user and the camera installation face using the parallax of the target object (the user commonly appearing in the two images) in the two images. The gate device 10 identifies a user closest to the gate device based on the calculated distance, and sets the identified user as a person to be authenticated. As described above, in the first example embodiment, the user in the forward-most row is identified regardless of the size of the face region having a large individual difference, so that the user to be authenticated can be accurately determined.

(Second example embodiment)

Next, the second example embodiment will be described in detail with reference to the drawings.

In the first example embodiment, the distance between the common region of the upper image and the lower image and the camera installation face is calculated, and the front/rear relationship of the users is determined based on the calculated distance. In the second example embodiment, a case where the front/rear relationship is determined based on the positional relationship of the users appearing in the image will be described.

Since the configuration of the authentication system according to the second example embodiment can be the same as that of the first example embodiment, the description related to Fig. 2 is omitted. Since the processing configurations of the gate device 10 and the server device 20 according to the second example embodiment can be the same as those of the first example embodiment, the description thereof will be omitted.

In the first example embodiment, the case where the user is imaged using the two cameras is described. However, in the second example embodiment, it is sufficient that the user can capture an image using at least one camera or more. For example, in a case where a user with a high height and a short height can be imaged by one camera, two cameras are unnecessary. Alternatively, the two cameras are unnecessary in a case where authentication regarding a user having a high height and a short height is unnecessary or an error is allowed at the time of authentication. It is a matter of course that the gate device 10 according to the second example embodiment may include two cameras. In the following description, a case where the gate device 10 according to the second example embodiment includes two cameras will be described.

Hereinafter, differences between the first and second example embodiments will be mainly described.

As described above, the face authentication module 11 is installed to be inclined at a predetermined angle with respect to the traveling direction of the user. For example, the face authentication module 11 is installed at 45 degrees ($\theta$ illustrated in Fig. 4 is 45 degrees).

Since the face authentication module 11 is installed to be inclined with respect to the traveling direction of the user, the position where the user appears in the image changes according to the position of the user (distance between the user and the gate device 10). Specifically, in a case where the user is present far away, the user appears on the side where face authentication module 11 is installed in gate device 10 (the left direction in the example of Fig. 4). Thereafter, when the user approaches the gate device 10, the position of the user (the position of the user appearing in the image) moves to the right side (the right direction; the positive direction in the X coordinate in a case where the lower left of the image is set as the origin).

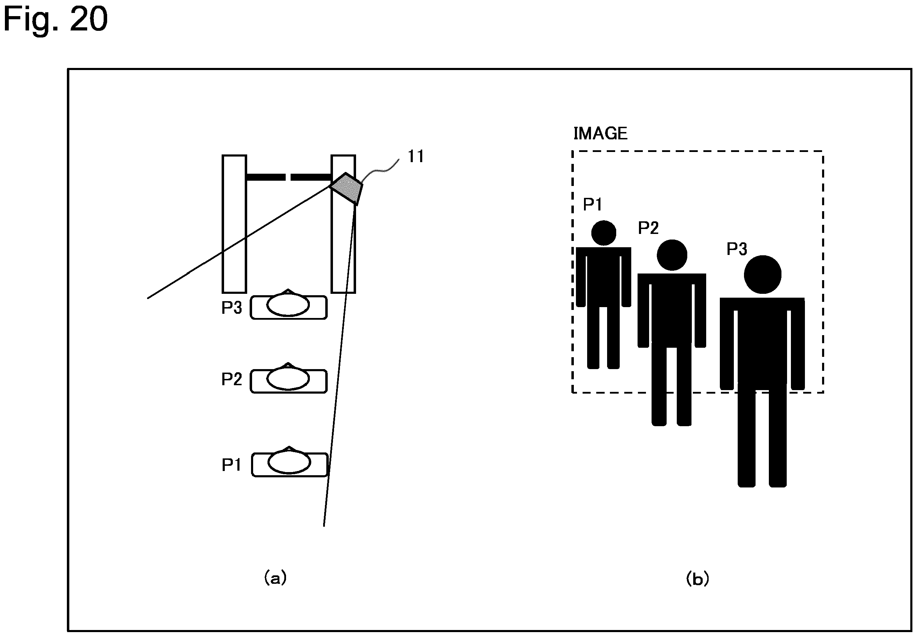

For example, as illustrated in Fig. 20A, a case where the user moves to positions P1, P2, and P3 is considered. In this case, the position of the user in the captured image moves from left to right as illustrated in Fig. 20B. This fact indicates that the user appearing in the right side of the image is close to the gate device 10. In other words, in a case where a plurality of users appears in the same image, it indicates that the user located on the right side of the image is closer to the gate device 10 than the user located on the left side. The gate device 10 according to the second exemplary example embodiment identifies the front/rear relationship between the plurality of users using this fact.

The authentication target setting unit 204 of the gate device 10 according to the second example embodiment is different from that of the first example embodiment in the process of step S112 illustrated in Fig. 7. In a case where a plurality of users appears in the image, the authentication target setting unit 204 identifies the user in the forward-most row among the plurality of users according to the position of each of the plurality of users in the image. The authentication target setting unit 204 sets the identified user as a person to be authenticated.

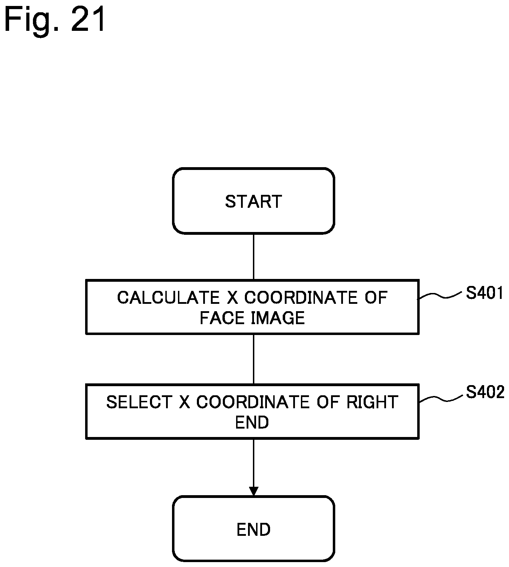

Fig. 21 is a flowchart illustrating an example of the operation of the authentication target setting unit 204 according to the second example embodiment. With reference to Fig. 21, the front/rear relationship identification process of the authentication target setting unit will be described.

The authentication target setting unit 204 calculates the X coordinate (the coordinate in the horizontal direction) of each face image included in the image (step S401). The calculation of the X coordinate may be performed using any one of the upper image and the lower image.

The authentication target setting unit 204 selects the X coordinate of the right end (step S402). The face image related to the selected X coordinate is to be authenticated.

The authentication target setting unit 204 may apply a predetermined condition to a target for identifying the front/rear relationship for a plurality of users (face images) included in the image. The authentication target setting unit 204 may set a face image satisfying a predetermined condition as the identification target of the front/rear relationship. Specifically, the authentication target setting unit 204 may exclude a user whose interocular distance is smaller than a predetermined value (for example, 60 pixels) from the determination related to the user in the forward-most row among the plurality of users. By setting such a condition, it is possible to exclude a user who appears at the right end of the image while being located far from the gate device 10.

In the gate device 10 illustrated in Figs. 3 and 4, since the face authentication module 11 is installed on the right side with respect to the traveling direction of the user, the user appearing at the right end of the image is set as the person to be authenticated. In a case where the face authentication module 11 is installed on the left side with respect to the traveling direction of the user, the user appearing at the left end of the image is set as the person to be authenticated.

As described above, the gate device 10 according to the second example embodiment identifies the user located at the end, of the image, determined according to the traveling direction of the user and the installation position of the camera as the user in the forward-most row. As a result, similarly to the first example embodiment, the gate device 10 can accurately determine the user to be authenticated.

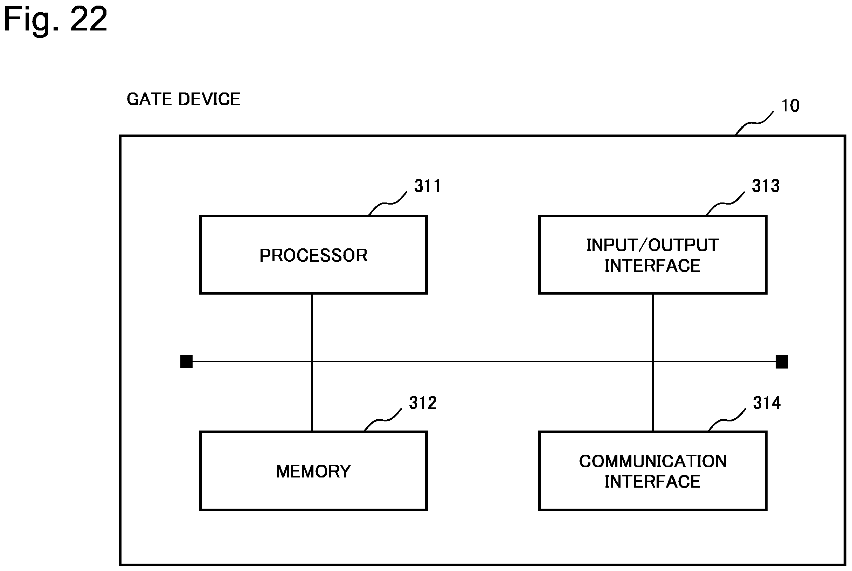

Next, hardware of each device constituting the authentication system will be described. Fig. 22 is a diagram illustrating an example of a hardware configuration of the gate device 10. Since the face authentication module 11, the camera 12, and the like have already been described, these elements are not illustrated in Fig. 22.

The gate device 10 includes a processor 311, a memory 312, an input/output interface 313, a communication interface 314, and the like. The components such as the processor 311 are connected by an internal bus or the like and are configured to be able to communicate with each other.

However, the configuration illustrated in Fig. 22 is not intended to limit the hardware configuration of the gate device 10. The gate device 10 may include hardware (not illustrated) or may not include the input/output interface 313 as necessary. The number of processors 311 and the like included in the gate device 10 is not limited to the example of Fig. 22, and for example, a plurality of processors 311 may be included in the gate device 10.

The processor 311 is a programmable device such as a central processing unit (CPU), a micro processing unit (MPU), or a digital signal processor (DSP). Alternatively, the processor 311 may be a device such as a field programmable gate array (FPGA) or an application specific integrated circuit (ASIC). The processor 311 is configured to perform various programs including an operating system (OS).

The memory 312 is a random access memory (RAM), a read only memory (ROM), a hard disk drive (HDD), a solid state drive (SSD), or the like. The memory 312 stores an OS program, an application program, and various pieces of data.

The input/output interface 313 is an interface of a display device or an input device (not illustrated). The display device may be the display 14. The input device may be a touch panel integrated with the display 14.

The communication interface 314 is a circuit, a module, or the like that communicates with another device. For example, the communication interface 314 includes a network interface card (NIC) or the like.

The functions of the gate device 10 are implemented by various processing modules. The processing module is implemented, for example, by the processor 311 executing a program stored in the memory 312. The program can be recorded in a computer-readable storage medium. The storage medium may be a non-transient (non-transitory) medium such as a semiconductor memory, a hard disk, a magnetic recording medium, or an optical recording medium. That is, the some non-limiting embodiments can also be embodied as a computer program product. The program can be downloaded via a network or updated using a storage medium storing the program. Further, the processing module may be achieved by a semiconductor chip.

The server device 20 can be configured similarly to the gate device 10, and a basic hardware configuration of the server device is not different from that of the gate device 10, so that the description is omitted.

The gate device 10 is equipped with a computer, and can achieve the function of the gate device 10 by causing the computer to execute a program. The gate device 10 performs the "method of controlling the gate device" by the program.

[Modified Example]

The configuration, operation, and the like of the authentication system described in the above example embodiment are merely examples, and are not intended to limit the configuration and the like of the system.

The application destination of the gate device 10 of the present disclosure is not particularly limited. For example, "airport" is exemplified as an application destination (installation place) of the gate device 10 of the present disclosure. Specifically, the gate device 10 may be used as part of a device responsible for an examination system using biometric authentication performed at an airport. In the examination system, identity confirmation (confirmation as to whether the photographed face image matches the face image described in the passport) is performed at the time of check-in, and face data (face image or feature amount), flight information, and passport information are stored in association with each other. When the identity confirmation is completed, a token for performing the examination in biometric authentication is generated. The gate device 10 of the present disclosure is installed in various examination areas (for example, the safety inspection site) in an airport, and the gate device 10 authenticates a user by collating a face image registered at the time of check in with a face image captured by the gate device.

In the above example embodiment, the case of detecting an approaching person using the in-gate sensor 16 is described. However, when it is difficult for a user different from the person to be authenticated to enter the gate device 10, the detection of the approaching person is unnecessary. For example, by configuring the long length of the main body of the gate device 10 in the traveling direction of the person passing through the gate and setting the authentication area inside the gate device 10, it is difficult for a user different from the person to be authenticated to enter the inside of the gate device 10.

In the above example embodiment, the gate device 10 including the two cameras (upper camera 12-1 and lower camera 12-2) is described. However, the gate device 10 may include one camera. In this case, one camera may be configured to be movable up and down, and the gate device 10 may acquire two images (upper image, lower image) by changing a position of the camera.

In the above example embodiment, the case where the user is imaged by the two cameras (upper camera 12-1 and lower camera 12-2), and the person to be authenticated (the user in the forward-most row) is identified using the parallax obtained from the two images is described. However, the number of cameras is not limited to two, and the person to be authenticated may be identified using three or more cameras. For example, the middle positioned camera is installed between the upper camera 12-1 and the lower camera 12-2. In this case, the gate device 10 can determine the front/rear relationship between the users appearing in the upper camera 12-1 and the middle camera and the front/rear relationship between the users appearing in the middle camera and the lower camera 12-2.

In the above example embodiment, the description has been made on the assumption that the performance of the upper camera 12-1 and the lower camera 12-2 is substantially the same. However, the performance of these cameras may be different. In this case, the gate device 10 may take measures to compensate for the performance difference between the two cameras. For example, the gate device 10 may convert the size or the like of one of the obtained two images. That is, the selection of the camera that can be used is widened by the measures such as the conversion processing, so that the gate device of the disclosure of the present application can be achieved even in a case where the installation place of the camera in the face authentication module 11 is limited.

In the above example embodiment, the case where the biological information related to the feature amount generated from the face image is transmitted from the gate device 10 to the server device 20 is described. However, the "face image" itself may be transmitted as the biological information from the gate device 10 to the server device 20. The server device 20 may generate a feature amount from the acquired face image and perform the authentication process (one-to-N collation). Even when the face image itself is transmitted to the server device 20, the gate device 10 determines the identity between the person to be authenticated and the approaching person using the feature amount generated from the face image.

In the above example embodiment, the determination on the identity between the person to be authenticated and the approaching person is performed by the gate device 10, but the determination may be performed by the server device 20. In this case, the gate device 10 acquires biological information about an approaching person into the internal area to transmit the biological information to the server device 20. The server device 20 may collate the biological information included in the authentication request with the biological information about the approaching person to determine the identity between the person to be authenticated and the approaching person.

In the above-described example embodiment, a so-called client server system is described in which the gate device 10 transmits the authentication request to the server device 20, and the server device 20 processes the request. However, the authentication process performed by the server device 20 may be performed by the gate device 10. That is, some or all of the functions of the server device 20 may be implemented by the gate device 10.

In the above example embodiment, it is described that an error is set in a case where the face images are distributed in either the upper image or the lower image and the image includes a plurality of face images (step S105 in Fig. 7). In this case, when the upper image includes a plurality of face images, the gate device 10 may determine the front/rear relationship using the parallax between the two images and the position of the user. For example, in the case of Fig. 9A, the front/rear relationship may be determined using target objects (the torso, the legs, or the like of the user) that appear in common in the upper image and the lower image. Alternatively, as described in the second exemplary example embodiment, the gate device 10 may determine the front/rear relationship according to the positions of the face images included in the upper image.

In the case illustrated in Fig. 9B, since there is no target object (user) that appears in common in the upper image and the lower image, it is not possible to determine the front/rear relationship using parallax. Therefore, when the face image is present only in the lower image, the gate device 10 may determine the front/rear relationship of the users

# EP 4 123 607 A1

according to the positions of the users in the image (lower image).

Alternatively, by combining the first and second example embodiments, the person to be authenticated may be selected using the parallax in the case illustrated in Figs. 8A and 9A, and the person to be authenticated may be selected according to the positions of the images in the case illustrated in Fig. 9B.

The gate device 10 may change the control of the LED for dimming according to the purpose of an acquired image (face image; biological information). For example, the gate device 10 may change the light intensity between the case of imaging the user located in the authentication area and the case of imaging the approaching person into the gate device.

A plurality the gate devices 10 may operate in conjunction with each other or in cooperation with each other. Specifically, the server device 20 may transmit a response to the authentication request acquired from one gate device 10 to another gate device 10. For example, in the example of Fig. 2, the result of authentication for the authentication request acquired from the gate device 10-1 may be transmitted to each of the gate devices 10-1 to 10-3. In this case, even when the person to be authenticated detected by the gate device 10-1 moves to the gate device 10-2 (even when the person to be authenticated enters the gate device 10-2), the person to be authenticated is permitted to pass through the gate device 10-2. In this case, the biological information about the person to be authenticated generated by the gate device 10-1 is transmitted from the gate device 10-1 to the other gate devices 10-2 and 10-3. Alternatively, the biological information about the person to be authenticated may be transmitted from the server device 20 to the other gate devices 10-2 and 10-3.

A form of data transmission and reception between the gate device 10 and the server device 20 is not particularly limited, but data transmitted and received between these devices may be encrypted. The face image and the feature amount calculated from the face image are personal information, and in order to appropriately protect the personal information, it is desirable that encrypted data be transmitted and received.

The gate device 10 may be installed in a limited space of an existing facility, for example. In this case, the length of the main body of the gate device 10 in the traveling direction of the person who passes through the gate device 10 can be about 1.5 meters, which is shorter than 2 to 3 meters, which is the length of a general face authentication gate, and the distance to the gate 17 can be, for example, 96 centimeters (related to one and a half steps of the stride of an adult male). When the length of the main body of the gate device 10 is about 1.5 meters, the length of the authentication area in the traveling direction is preferably about 30 cm to 60 cm.

In the flow chart (flowchart and sequence diagram) used in the above description, a plurality of steps (processes) is described in order, but the execution order of the steps performed in the example embodiment is not limited to the described order. In the example embodiment, for example, the order of the illustrated steps can be changed within a range in which there is no problem in terms of content, such as performing each process in parallel.

The above example embodiments have been described in detail in order to facilitate understanding of the present disclosure, and it is not intended that all the configurations described above are necessary. In a case where a plurality of example embodiments is described, each example embodiment may be used alone or in combination. For example, part of the configuration of the example embodiment can be replaced with the configuration of another example embodiment, or the configuration of another example embodiment can be added to the configuration of the example embodiment. Furthermore, it is possible to add, delete, and replace another configuration for part of the configuration of the example embodiment.

Although the industrial applicability of the some non-limiting embodiments is apparent from the above description, the some non-limiting embodiments can be suitably applied to an authentication system installed in an airport, a station, or the like.

Some or all of the above example embodiments may be described as the following supplementary notes, but are not limited to the following.

[Supplementary Note 1]

A gate device including:

an acquisition unit that acquires an upper image and a lower image from an upper camera and a lower camera installed below the upper camera in a vertical direction, respectively;
a setting unit that, when a plurality of users appears in both of the upper image and the lower image, identifies a user in a forward-most row from among the plurality of users by calculating a distance between each of the plurality of users and a camera installation face, and sets the identified user as a person to be authenticated; and
a gate control unit that controls a gate based on a result of authentication of the person to be authenticated.

16

[Supplementary Note 2]

The gate device according to Supplementary Note 1, wherein the setting unit calculates a distance to the camera installation face from a target object appearing in a common region common to the upper image and the lower image, and identifies the user in the forward-most row.

[Supplementary Note 3]

The gate device according to Supplementary Note 2, wherein the setting unit calculates parallax between the upper image and the lower image of the target object, and calculates a distance between the target object and the camera installation face by a stereo method using the calculated parallax.

[Supplementary Note 4]

The gate device according to Supplementary Note 2 or 3, wherein the setting unit identifies peaks according to the number of the plurality of users in a relationship between a position of the target object and a distance to a camera installation face from the target object, and identifies a user at a position related to a minimum peak value among the plurality of identified peaks as the user in the forward-most row.

[Supplementary Note 5]

The gate device according to any one of Supplementary Notes 1 to 4, wherein, when one user appears in both the upper image and the lower image, the setting unit sets the one user as the person to be authenticated.

[Supplementary Note 6]

The gate device according to any one of Supplementary Notes 1 to 4, wherein, when one user appears in one of the upper image and the lower image, the setting unit sets the one user as the person to be authenticated.

[Supplementary Note 7]

The gate device according to any one of Supplementary Notes 1 to 6, further including an authentication request unit that transmits an authentication request including biological information about the person to be authenticated to a server device.

[Supplementary Note 8]

The gate device according to Supplementary Note 7, wherein the authentication request unit transmits the authentication request including a feature amount generated from a face image of the person to be authenticated to the server device.

[Supplementary Note 9]

The gate device according to any one of Supplementary Notes 1 to 8, wherein a position of the upper camera and a position of the lower camera on the camera installation face in a horizontal direction are identical.

[Supplementary Note 10]

An authentication system including:

a server device that stores biological information about each of a plurality of system users and performs an authentication process using the plurality of pieces of biological information; and
a gate device connected to the server device, wherein
the gate device includes:

an acquisition unit that acquires an upper image and a lower image from an upper camera and a lower camera installed below the upper camera in a vertical direction, respectively;
a setting unit that, when a plurality of users appears in both of the upper image and the lower image, identifies

17

a user in a forward-most row from among the plurality of users by calculating a distance between each of the plurality of users and a camera installation face, and sets the identified user as a person to be authenticated; an authentication request unit that requests the server device to authenticate the person to be authenticated; and a gate control unit that controls a gate based on a result of authentication of the person to be authenticated.

[Supplementary Note 11]

The authentication system according to Supplementary Note 10, wherein

the authentication request unit transmits an authentication request including biological information about the person to be authenticated to the server device, and
the server device authenticates the person to be authenticated by using biological information acquired from the authentication request and biological information about the plurality of system users.

[Supplementary Note 12]

A method of controlling a gate device, the method including:

by the gate device,
acquiring an upper image and a lower image from an upper camera and a lower camera installed below the upper camera in a vertical direction, respectively, when a plurality of users appears in both of the upper image and the lower image;
identifying a user in a forward-most row from among the plurality of users by calculating a distance between each of the plurality of users and a camera installation face, and setting the identified user as a person to be authenticated; and
controlling a gate based on a result of authentication of the person to be authenticated.

[Supplementary Note 13]

A computer-readable storage medium storing a program for causing a computer mounted on a gate device to execute processes of:

acquiring an upper image and a lower image from an upper camera and a lower camera installed below the upper camera in a vertical direction, respectively;
when a plurality of users appears in both of the upper image and the lower image, identifying a user in a forward-most row from among the plurality of users by calculating a distance between each of the plurality of users and a camera installation face, and setting the identified user as a person to be authenticated; and
controlling a gate based on a result of authentication of the person to be authenticated.

The disclosures of the cited prior art documents are incorporated herein by reference. While the example embodiments of the some non-limiting embodiments have been described above, the some non-limiting embodiments is not limited to these example embodiments. It will be understood by those skilled in the art that these example embodiments are exemplary only and that various variations are possible without departing from the scope and spirit of the some non-limiting embodiments. That is, it goes without saying that the some non-limiting embodiments includes various modifications and corrections that can be made by those skilled in the art in accordance with the entire disclosure including the claims and the technical idea.

[Reference signs List]

| 10, 10-1 to 10-3, 100 | gate device |
|---|---|
| 11 | face authentication module |
| 12-1 | upper camera |
| 12-2 | lower camera |
| 13 | display |
| 14 | display |
| 15 | area sensor |

| 16 | in-gate sensor |
| 17 | gate |
| 20 | server device |
| 101 | acquisition unit |
| 102 | setting unit |
| 103, 207 | gate control unit |
| 201, 301 | communication control unit |
| 202 | user detection unit |
| 203 | biological information acquisition unit |
| 204 | authentication target setting unit |
| 205 | authentication request unit |
| 206 | approaching person determination unit |
| 208 | message output unit |
| 209, 304 | storage unit |
| 302 | user registration unit |
| 303 | authentication unit |
| 311 | processor |
| 312 | memory |
| 313 | input/output interface |
| 314 | communication interface |

**Claims**

1. A gate device comprising:

    an acquisition unit that acquires an upper image and a lower image from an upper camera and a lower camera installed below the upper camera in a vertical direction, respectively;
    a setting unit that, when a plurality of users appears in both of the upper image and the lower image, identifies a user in a forward-most row from among the plurality of users by calculating a distance between each of the plurality of users and a camera installation face, and sets the identified user as a person to be authenticated; and
    a gate control unit that controls a gate based on a result of authentication of the person to be authenticated.

2. The gate device according to claim 1, wherein the setting unit calculates a distance to the camera installation face from a target object appearing in a common region common to the upper image and the lower image, and identifies the user in the forward-most row.

3. The gate device according to claim 2, wherein the setting unit calculates parallax between the upper image and the lower image of the target object, and calculates a distance between the target object and the camera installation face by a stereo method using the calculated parallax.

4. The gate device according to claim 2 or 3, wherein the setting unit identifies peaks according to the number of the plurality of users in a relationship between a position of the target object and a distance to a camera installation face from the target object, and identifies a user at a position related to a minimum peak value among the plurality of identified peaks as the user in the forward-most row.

5. The gate device according to any one of claims 1 to 4, wherein, when one user appears in both the upper image and the lower image, the setting unit sets the one user as the person to be authenticated.

6. The gate device according to any one of claims 1 to 4, wherein, when one user appears in one of the upper image and the lower image, the setting unit sets the one user as the person to be authenticated.

7. The gate device according to any one of claims 1 to 6, further comprising an authentication request unit that transmits an authentication request including biological information about the person to be authenticated to a server device.

8. The gate device according to claim 7, wherein the authentication request unit transmits the authentication request including a feature amount generated from a face image of the person to be authenticated to the server device.

9. The gate device according to any one of claims 1 to 8, wherein a position of the upper camera and a position of the lower camera on the camera installation face in a horizontal direction are identical.

10. An authentication system comprising:

a server device that stores biological information about each of a plurality of system users and performs an authentication process using the plurality of pieces of biological information; and
a gate device connected to the server device, wherein
the gate device includes:

an acquisition unit that acquires an upper image and a lower image from an upper camera and a lower camera installed below the upper camera in a vertical direction, respectively;
a setting unit that, when a plurality of users appears in both of the upper image and the lower image, identifies a user in a forward-most row from among the plurality of users by calculating a distance between each of the plurality of users and a camera installation face, and sets the identified user as a person to be authenticated;
an authentication request unit that requests the server device to authenticate the person to be authenticated; and
a gate control unit that controls a gate based on a result of authentication of the person to be authenticated.

11. The authentication system according to claim 10, wherein

the authentication request unit transmits an authentication request including biological information about the person to be authenticated to the server device, and
the server device authenticates the person to be authenticated by using biological information acquired from the authentication request and biological information about the plurality of system users.

12. A method of controlling a gate device, the method comprising:

by the gate device,
acquiring an upper image and a lower image from an upper camera and a lower camera installed below the upper camera in a vertical direction, respectively;
when a plurality of users appears in both of the upper image and the lower image, identifying a user in a forward-most row from among the plurality of users by calculating a distance between each of the plurality of users and a camera installation face, and setting the identified user as a person to be authenticated; and
controlling a gate based on a result of authentication of the person to be authenticated.

13. A computer-readable storage medium storing a program for causing a computer mounted on a gate device to execute processes of:

acquiring an upper image and a lower image from an upper camera and a lower camera installed below the upper camera in a vertical direction, respectively;
when a plurality of users appears in both of the upper image and the lower image, identifying a user in a forward-most row from among the plurality of users by calculating a distance between each of the plurality of users and a camera installation face, and setting the identified user as a person to be authenticated; and
controlling a gate based on a result of authentication of the person to be authenticated.

# Fig. 1

GATE DEVICE                                    100

ACQUISITION UNIT                               101

SETTING UNIT                                   102

GATE CONTROL UNIT                              103

Fig. 2

AUTHENTICATION SYSTEM

SERVER DEVICE — 20

10-1  10-2  10-3  ...

EP 4 123 607 A1

Fig. 3

10: GATE DEVICE

AUTHENTICATION AREA

# Fig. 4

10; GATE DEVICE

17

θ

11; FACE AUTHENTICATION
MODULE

U

AUTHENTICATION AREA

## Fig. 5

GATE DEVICE                                                          10

**COMMUNICATION CONTROL UNIT** — 201

**USER DETECTION UNIT** — 202

**BIOLOGICAL INFORMATION ACQUISITION UNIT** — 203

**AUTHENTICATION TARGET SETTING UNIT** — 204

**AUTHENTICATION REQUEST UNIT** — 205

**APPROACHING PERSON DETERMINATION UNIT** — 206

**GATE CONTROL UNIT** — 207

**MESSAGE OUTPUT UNIT** — 208

**STORAGE UNIT** — 209

EP 4 123 607 A1

# Fig. 6

UPPER IMAGE

(a)

LOWER IMAGE

(b)

COMMON REGION

(c)

EP 4 123 607 A1

**Fig. 7**

```
                        ┌──────────────┐
                        │    START     │
                        └──────┬───────┘
                               │           ⌒ S101
                        ┌──────┴───────────┐
                        │ EXTRACT FACE IMAGE │
                        └──────┬───────────┘
                               │                    ⌒ S102
                        ╱──────┴───────────╲          UPPER OR LOWER
                       ⟨ FACE IMAGE DISTRIBUTION ⟩──────────────┐
                        ╲──────┬───────────╱                    │
                  DISTRIBUTED │                                 │
                  VERTICALLY  │                          ⌒ S103 ▼                    N
                              │               ╱──────────────────╲──────────────┐
                              │              ⟨   ONE FACE IMAGE?   ⟩             │
                              │               ╲──────────┬───────╱              │
                              │                      Y   │    ⌒ S104      ⌒ S105 │
                              │              ┌───────────┴──────┐   ┌───────────┴──┐
                              │              │ SET AS AUTHENTICATION│   │  SET ERROR  │
                              │              │     TARGET       │   └───────┬──────┘
                              │              └───────────┬──────┘           │
                        ⌒ S110│                          │                  │
          Y      ╱─────────────┴───────────╲             │                  │
       ┌────────⟨      ONE FACE IMAGE?      ⟩            │                  │
       │         ╲───────────┬─────────────╱             │                  │
 ⌒ S111│                 N   │                           │                  │
┌──────┴────────────┐        │    ⌒ S112                 │                  │
│ SET AS AUTHENTICATION│      │ ┌──────────────────┐      │                  │
│     TARGET         │       │ │ IDENTIFICATION OF │      │                  │
└──────┬────────────┘        │ │   FRONT/REAR      │      │                  │
       │                     │ │  RELATIONSHIP     │      │                  │
       │                     │ └──────────────────┘      │                  │
       │                     │    ⌒ S113                 │                  │
       │              ┌──────┴───────────┐               │                  │
       │              │ SET FORWARD-MOST ROW │            │                  │
       │              └──────┬───────────┘               │                  │
       │                     │                           │                  │
       └─────────────────────┼───────────────────────────┘──────────────────┘
                             │
                      ┌──────┴───────┐
                      │     END      │
                      └──────────────┘
```

EP 4 123 607 A1

# Fig. 8

(a)

(b)

Fig. 9

UPPER IMAGE

LOWER IMAGE

(a)

UPPER IMAGE

LOWER IMAGE

(b)

EP 4 123 607 A1

# Fig. 10

UPPER IMAGE

LOWER IMAGE

(a)

UPPER IMAGE

U2   U1

LOWER IMAGE

(b)

# Fig. 11

```
                    ┌──────────────────┐
                    │      START       │
                    └──────────────────┘
                             │
          ┌──────────────────────────────────┐
          │  SET DISTANCE MEASUREMENT         │────S201
          │            BAND                   │
          └──────────────────────────────────┘
                             │
          ┌──────────────────────────────────┐
          │     CALCULATE DISTANCE            │────S202
          └──────────────────────────────────┘
                             │
          ┌──────────────────────────────────┐
          │   IDENTIFY POSITION OF PEAK       │────S203
          └──────────────────────────────────┘
                             │
          ┌──────────────────────────────────┐
          │    SELECT MINIMUM VALUE           │────S204
          └──────────────────────────────────┘
                             │
                             ▼
                    ┌──────────────────┐
                    │       END        │
                    └──────────────────┘
```

# Fig. 12

Fig. 13

TARGET OBJECT

12-1; UPPER CAMERA

CAMERA INTERVAL B

12-2; LOWER CAMERA

DISTANCE D

FOCAL DISTANCE f

PARALLAX Z

IMAGING FACE

# Fig. 14

DISTANCE D

POSITION

X2    X1

# Fig. 15

AUTHENTICATION REQUEST

| GATE IDENTIFIER | FEATURE AMOUNT (BIOLOGICAL INFORMATION) | ... |
|---|---|---|

Fig. 16

```
                                    ┌──────────────┐
                                    │    START     │
                                    └──────┬───────┘
                                           │
        ┌──────────────────────────────────│
        │                                  ▼                    S301
        │   N      ╱‾‾‾‾‾‾‾‾‾‾‾‾‾‾‾‾‾‾‾‾‾‾‾‾‾‾‾‾‾‾‾╲
        └─────────〈        DETECT USER?           〉
                   ╲_____╱
                              │ Y
                              ▼                                 S302
                   ┌─────────────────────────────┐
                   │     ACQUIRE FACE IMAGE        │
                   └──────────────┬──────────────┘
                                  ▼                             S303
                   ┌─────────────────────────────┐
                   │   CALCULATE FEATURE AMOUNT    │
                   └──────────────┬──────────────┘
                                  ▼                             S304
                   ┌─────────────────────────────┐
                   │   TRANSMIT AUTHENTICATION     │
                   │   REQUEST AND RECEIVE RESULT  │
                   └──────────────┬──────────────┘
                                  ▼                             S305
          N       ╱‾‾‾‾‾‾‾‾‾‾‾‾‾‾‾‾‾‾‾‾‾‾‾‾‾‾‾‾‾╲
      ┌──────────〈   APPROACHING PERSON IS      〉
      │           ╲        PRESENT?             ╱
      │            ╲_____╱
      │                       │ Y
      │                       ▼                                 S306
      │   N      ╱‾‾‾‾‾‾‾‾‾‾‾‾‾‾‾‾‾‾‾‾‾‾‾‾‾‾‾‾‾‾╲
      ├─────────〈  APPROACHING PERSON AND       〉
      │          〈 PERSON TO BE AUTHENTICATED   〉
      │           ╲     ARE IDENTICAL?          ╱
      │            ╲_____╱
      │                       │ Y
      │                       ▼                                 S307
      │   N      ╱‾‾‾‾‾‾‾‾‾‾‾‾‾‾‾‾‾‾‾‾‾‾‾‾‾‾‾‾‾‾╲
      ├─────────〈   RECEIVE "AUTHENTICATION     〉
      │          〈  SUCCEEDED" FROM SERVER      〉
      │           ╲         DEVICE?             ╱
      │            ╲_____╱
      │                       │ Y
      ▼  S309                 ▼                                 S308
┌──────────────────┐  ┌─────────────────────────────┐
│ PERFORM ERROR     │  │         OPEN GATE            │
│ PROCESS           │  └──────────────┬──────────────┘
└────────┬─────────┘                  │
         │                            │
         └──────────────┬─────────────┘
                        ▼
                 ┌──────────────┐
                 │     END      │
                 └──────────────┘
```

## Fig. 17

SERVER DEVICE                                                          20

COMMUNICATION CONTROL UNIT — 301

USER REGISTRATION UNIT — 302

AUTHENTICATION UNIT — 303

STORAGE UNIT — 304

EP 4 123 607 A1

# Fig. 18

<u>USER DATABASE</u>

| USER ID | FEATURE AMOUNT | NAME | SEX | ・・・ |
|---------|----------------|------|-----|------|
| ID01 | FV1 | AAA | MALE | ・・・ |
| ID02 | FV2 | BBB | FEMALE | ・・・ |
| ID03 | FV3 | CCC | MALE | ・・・ |
| ⋮ | ⋮ | ⋮ | ⋮ | ⋮ |

## Fig. 19

```
        ┌──────────────────┐              ┌──────────────┐
        │┌──────────────────┐             │    SERVER    │
        ││   GATE DEVICE    │             │    DEVICE    │
        └│                  │             └──────────────┘
         └──────────────────┘  .·'               │
                  │                               │
        ┌──────────────────────┐                 │
        │   S01; DETECT USER   │                 │
        └──────────────────────┘                 │
                  │                               │
        ┌──────────────────────┐                 │
        │ S02; TRANSMIT        │─────────────────▶│
        │ AUTHENTICATION       │                  │
        │ REQUEST              │        ┌──────────────────────────┐
        └──────────────────────┘        │ S11; PERFORM             │
                  │                      │ AUTHENTICATION PROCESS   │
        ┌──────────────────────┐        └──────────────────────────┘
        │ S03; DETECT          │                  │
        │ APPROACHING PERSON   │                  │
        └──────────────────────┘        ┌──────────────────────────┐
                  │◀───────────────────│ S12; TRANSMIT RESULT OF  │
        ┌──────────────────────┐        │ AUTHENTICATION           │
        │ S04; CHECK GATE      │        └──────────────────────────┘
        │ OPENING CONDITION    │                  │
        └──────────────────────┘                  │
                  │                                │
        ┌──────────────────────┐                  │
        │  S05; OPEN GATE      │                  │
        └──────────────────────┘                  │
                  │                                │
                  ▼                                ▼
```

EP 4 123 607 A1

Fig. 20

# Fig. 21

```
        ┌─────────────┐
        │    START    │
        └──────┬──────┘
               │
    ┌──────────┴──────────┐
    │ CALCULATE X COORDINATE OF │──── S401
    │     FACE IMAGE      │
    └──────────┬──────────┘
               │
    ┌──────────┴──────────┐
    │ SELECT X COORDINATE OF RIGHT │──── S402
    │        END          │
    └──────────┬──────────┘
               │
               ▼
        ┌─────────────┐
        │     END     │
        └─────────────┘
```

# Fig. 22

GATE DEVICE

10

311 PROCESSOR

313 INPUT/OUTPUT INTERFACE

312 MEMORY

314 COMMUNICATION INTERFACE

EP 4 123 607 A1

**INTERNATIONAL SEARCH REPORT**

International application No.

PCT/JP2020/012036

A.  CLASSIFICATION OF SUBJECT MATTER
Int. Cl. G07C9/37(2020.01)i, E05B49/00(2006.01)i, G06T1/00(2006.01)i
FI: G07C9/37, G06T1/00 400H, E05B49/00 R

According to International Patent Classification (IPC) or to both national classification and IPC

B.  FIELDS SEARCHED

Minimum documentation searched (classification system followed by classification symbols)
Int. Cl. G07C9/00-9/38, G07B15/00-15/06, E05B49/00, G06T1/00

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2006-236244 A (TOSHIBA CORP.) 07 September 2006, paragraphs [0015]-[0057], fig. 1-11 | 1-6, 9, 12-13 |
| Y | | 7-8, 10-11 |
| Y | JP 2020-38545 A (PANASONIC INTELLECTUAL PROPERTY MANAGEMENT CO., LTD.) 12 March 2020, paragraphs [0039]-[0041], [0114]-[0118], fig. 2, 10 | 7-8, 10-11 |

☐  Further documents are listed in the continuation of Box C.      ☒  See patent family annex.

*  Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

Date of the actual completion of the international search
25.05.2020

Date of mailing of the international search report
02.06.2020

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**
Information on patent family members

| | | International application No. |
|---|---|---|
| | | PCT/JP2020/012036 |

| Patent Documents referred to in the Report | Publication Date | Patent Family | Publication Date |
|---|---|---|---|
| JP 2006-236244 A | 07.09.2006 | US 2006/0204050 A1 paragraphs [0035]-[0107], fig. 1-13 EP 1696393 A2 | |
| JP 2020-38545 A | 12.03.2020 | (Family: none) | |

Form PCT/ISA/210 (patent family annex) (January 2015)

**REFERENCES CITED IN THE DESCRIPTION**

**Patent documents cited in the description**

- JP 2006236244 A
- JP 2018128970 A
- JP 2018109935 A